# EUROPÄISCHE PATENTSCHRIFT

(11) **EP 3 614 795 B1**
(45) Veröffentlichungstag und Bekanntmachung des Hinweises auf die Patenterteilung: **05.07.2023**
(21) Anmeldenummer: 19191642.8
(22) Anmeldetag: 14.08.2019
(51) Int. Cl.: H05B 1/02, H05B 6/06, H05B 6/12

(54) **VERFAHREN ZUR AUTOMATISCHEN ZUORDNUNG MINDESTENS EINES AUFSTELLGERÄTS ZU MINDESTENS EINER KOCHSTELLE EINES INDUKTIVEN KOCHFELDS, INDUKTIVES KOCHFELD, AUFSTELLGERÄT UND SYSTEM ZUR DURCHFÜHRUNG DES VERFAHRENS**
METHOD FOR AUTOMATICALLY ASSIGNING AT LEAST ONE SETTING DEVICE TO AT LEAST ONE COOKING POINT OF AN INDUCTIVE COOKING HOB, INDUCTIVE COOKING HOB, SETTING DEVICE AND SYSTEM FOR CARRYING OUT SAID METHOD
PROCÉDÉ D'ATTRIBUTION AUTOMATIQUE D'AU MOINS UN APPAREIL DE MONTAGE D'AU MOINS UN POINT DE CUISSON D'UNE PLAQUE DE CUISSON À INDUCTION, PLAQUE DE CUISSON À INDUCTION, DISPOSITIF DE MONTAGE ET SYSTÈME DE MISE EN OUVRE DUDIT PROCÉDÉ

(30) Priorität: 16.08.2018 DE 102018119965
(43) Veröffentlichungstag der Anmeldung: 26.02.2020
(73) Patentinhaber: Miele & Cie. KG, 33332 Gütersloh (DE)
(72) Erfinder: Ohrmann, Niels, 33332 Gütersloh (DE); Ennen, Volker, 32130 Enger (DE); Ebke, Daniel, 33613 Bielefeld (DE)

(56) Entgegenhaltungen:
- DE-A1-102010 039 071
- DE-A1-102015 222 797
- US-A1- 2010 147 832
- US-A1- 2015 257 576

## Beschreibung

Die Erfindung betrifft ein Verfahren zur automatischen Zuordnung mindestens eines Aufstellgeräts zu mindestens einer Kochstelle eines induktiven Kochfelds, ein induktives Kochfeld, ein Aufstellgerät und ein System zur Durchführung des Verfahrens.

Aus den Druckschriften DE 10 2010 039 071 A1 und US 2015 0257576 A1 sind Systeme mit einer induktiven Kochstelle und einem Aufsatzgerät für die Kochstelle bekannt. Dabei kann die Primärspule der Kochstelle eine Sekundärspule des Aufsatzgerätes induktiv mit Energie versorgen.

Aus der EP 3 001 771 B1 ist ein Verfahren zur Detektion der Identität eines Topfes auf einer Kochstelle eines Kochfelds und ein System eines Kochfelds mit einem Topf bekannt. Das Kochfeld weist ein Topfsensormittel auf, mittels dem das Vorhandensein eines Topfes auf der Kochstelle detektiert werden soll. Der Topf weist einen Temperatursensor und einen Sender auf, wobei der Sender mindestens zwei Datensätze an einen Empfänger einer Kochfeldsteuerung übertragen soll. Der erste Datensatz soll eine Identifizierungseinrichtung für einen einzelnen Topf darstellen, während der zweite Datensatz den mittels des Temperatursensors gemessenen Temperaturzustand des Topfes betreffen soll. Wenn das Topfsensormittel das Vorhandensein eines beliebigen Topfes detektiert hat, soll mittels einer Leistungsprofilvorlage ein Heizelement aktiviert werden, um eine Temperaturveränderung im auf der Kochstelle aufgestellten Topf zu bewirken. Aufgrund der thermischen Kapazität des Topfes liegt dabei immer eine Verzögerung der Temperaturveränderung zu der Leistungsprofilvorlage vor. Mittels der an die Kochfeldsteuerung zurückgesendeten Temperaturinformationen soll dann bestimmt werden, ob das vom Temperatursensor am Topf detektierte Temperaturprofil zu der vom Heizelement erzeugten Vorlage des Leistungsprofils korrespondiert. Falls Temperaturprofil und Leistungsprofilvorlage zueinander korrespondieren, soll der Topf mit der Topfidentifikationseinrichtung als auf diese Kochstelle aufgestellt erkannt werden.

Auch die Druckschrift DE 10 2015 222 797 A1 erwähnt nebenbei die Möglichkeit, beim anschalten eines Kochgeräts, für kurze Zeit an allen Kochstellen die jeweils zugehörige Spule zur Energieversorgung einzuschalten. Jedes auf einer Kochstelle befindliche Kochgeschirr wird dann mit Energie versorgt und kann mittels einer Signalübertragung über eine Übertragungseinrichtung seine Existenz an das Kochgerät melden, z.B. mittels einer Übertragung von Temperaturdaten. Die Herdelektronik weiß dann, auf welchem Kochfeld ein Kochgeschirr mit der entsprechenden Schaltung steht.

Der Erfindung stellt sich somit das Problem, eine automatische Zuordnung mindestens eines Aufstellgeräts zu mindestens einer Kochstelle eines induktiven Kochfelds zu verbessern.

Erfindungsgemäß wird dieses Problem durch ein Verfahren zur automatischen Zuordnung mindestens eines Aufstellgeräts zu mindestens einer Kochstelle eines induktiven Kochfelds mit den Merkmalen des Patentanspruchs 1 und durch ein System zur Durchführung eines derartigen Verfahrens mit dem Merkmalen des Patentanspruchs 21 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen insbesondere darin, dass zum einen für die Sendeeinheit des mindestens einen Aufstellgeräts keine Energiequelle an dem Aufstellgerät vorgesehen sein muss. Die für die Sendeeinheit erforderliche Energie wird aus der in die Induktionsspule des Aufstellgeräts induzierten Spannung generiert. Bevorzugt wird die Sendeeinheit bei einer mittels mindestens einer der Heizspulen in die Induktionsspule des auf die dieser Heizspule zugeordneten Kochstelle aufgestellten Aufstellgeräts induzierten Spannung mit einer Betriebsenergie versorgt und dadurch derart angesteuert, dass die Sendeeinheit des Aufstellgeräts mittels der Betriebsenergie das Antwortsignal an die Empfangseinheit sendet. Somit wird die automatische Zuordnung des mindestens einen Aufstellgeräts zu der mindestens einen Kochstelle auf einfache Weise realisiert, in dem die Ansteuerung der mindestens einen Heizspule der Kochstelle, auf der das Aufstellgerät aufgestellt ist, mit einem Zuordnungssignal gleichzeitig das Senden des das Aufstellgerät identifizierenden und zu dem mittels mindestens einer der dieser Kochstelle zugeordneten Heizspulen in die Induktionsspule des Aufstellgeräts induzierten Zuordnungssignal korrelierenden Antwortsignals an die mit der Auswerteeinheit signalübertragende Empfangseinheit der Kochfeldsteuerung oder eines mit der Kochfeldsteuerung signalübertragend verbundenen Drittgeräts auslöst. Denkbar ist beispielsweise, dass eines oder mehrere Merkmale des jeweiligen Zuordnungssignals, wie beispielsweise ansteigende Flanken, abfallende Flanken, Signaldauer, Maxima und/oder Minima, ein Senden des Antwortsignals mittels der Sendeeinheit des jeweiligen Aufstellgeräts auslösen. Bei mehreren einer Kochstelle zugeordneten Heizspulen ist lediglich die Ansteuerung einer dieser Heizspulen mit einem Zuordnungssignal erforderlich.

Entsprechend werden erfindungsgemäß mittels der in die Induktionsspule des Aufstellgeräts induzierten Spannung die für das Senden des Antwortsignals erforderliche Betriebsenergie erzeugt wie auch der Sendevorgang selbst ausgelöst. Darüber hinaus ist durch das Senden eines zu dem in die Induktionsspule des Aufstellgeräts induzierten Zuordnungssignals, beispielsweise eines Leistungsprofils, korrelierenden Antwortsignals eine schnellere automatische Zuordnung des mindestens einen Aufstellgeräts zu der mindestens einen Kochstelle eines eine Mehrzahl von Kochstellen aufweisenden induktiv beheizten Kochfelds ermöglicht. Es ergibt sich im Wesentlichen keine zeitliche Verzögerung bei der automatischen Zuordnung aufgrund von Eigenschaften des mindestens einen Aufstellgeräts, beispielsweise aufgrund von einer zu dem induzierten Leistungsprofil korrelierenden Temperaturmessung an einem als Topf ausgebildeten Aufstellgerät. Das Antwortsignal betrifft also nicht eine Temperaturmessung oder dergleichen, sondern korreliert direkt mit dem Zuordnungssignal.

Der Ausdruck "Zuordnungssignal" bei der Ansteuerung der Heizspulen der Kochstellen wie auch bei der Induktion der Induktionsspule des mindestens einen Aufstellgeräts ist allgemein zu verstehen. Entsprechend kann es sich bei dem Zuordnungssignal beispielsweise um ein Leistungsprofil handeln. Das Zuordnungssignal kann ein Überschreiten eines vorher festgelegten Grenzwertes oder ein Unterschreiten eines vorher festgelegten Grenzwertes aufweisen. Denkbar sind auch eine Unterbrechung der Leistung sowie ein Herabsetzen oder eine Erhöhung der Leistung. Darüber hinaus sind beispielsweise auch mehr oder weniger komplexe Leistungsprofile möglich, die Rampen und/oder Stufenfunktionen und/oder variable Abstände von Leistungsspitzen/Leistungssenken und/oder variable Dauern von Leistungsspitzen/Leistungssenken aufweisen. Die vorgenannten Ausführungen bezüglich der Leistung eines als Leistungsprofil ausgebildeten Zuordnungssignals beziehen sich in analoger Weise auf ein als ein Strom oder als eine Spannung ausgebildetes Zuordnungssignal. Die vorgenannten Ausführungen sind lediglich exemplarisch und damit nicht erschöpfend.

Grundsätzlich ist die Ansteuerung der Heizspulen der Kochstellen des Kochfelds zur automatischen Zuordnung des mindestens einen Aufstellgeräts zu mindestens einer Kochstelle der Mehrzahl von Kochstellen des induktiv beheizten Kochfelds in weiten geeigneten Grenzen frei wählbar. Vorteilhafterweise sieht eine Weiterbildung des erfindungsgemäßen Verfahrens vor, dass die Heizspulen der Kochstellen des Kochfelds zur automatischen Zuordnung sukzessive angesteuert werden. Hierdurch ist die erfindungsgemäße automatische Zuordnung auf technisch besonders einfache Weise realisiert. Dies ist deshalb der Fall, weil zu einem Zeitpunkt jeweils lediglich eine Heizspule und damit lediglich eine einzige Kochstelle des Kochfelds bestromt wird.

Eine dazu alternative Weiterbildung des erfindungsgemäßen Verfahrens sieht vor, dass die Heizspulen der Kochstellen des Kochfelds zur automatischen Zuordnung gleichzeitig angesteuert werden. Auf diese Weise ist die Geschwindigkeit der automatischen Zuordnung erhöht, da gleichzeitig Heizspulen von voneinander verschiedenen Kochstellen des Kochfelds mittels der Kochfeldsteuerung angesteuert und damit bestromt werden.

Eine die beiden vorgenannten Weiterbildungen des erfindungsgemäßen Verfahrens synergetisch verbindende Weiterbildung sieht in vorteilhafterweise vor, dass die Heizspulen der Kochstellen des Kochfelds zur automatischen Zuordnung in einer ersten Zuordnungsphase gleichzeitig und in einer zweiten Zuordnungsphase sukzessive angesteuert werden. Hierdurch ist zum einen die Geschwindigkeit der automatischen Zuordnung im Vergleich zu einer rein sukzessiven Ansteuerung erhöht. Zum anderen ist der technische Aufwand bei der automatischen Zuordnung im Vergleich zu einer rein simultanen, also gleichzeitigen, Ansteuerung reduziert. Beispielsweise kann in der ersten Zuordnungsphase zunächst festgestellt werden, auf welchen der Mehrzahl von Kochstellen des Kochfelds überhaupt ein Aufstellgerät aufgestellt ist. In der zweiten Zuordnungsphase kann dann vorgesehen sein, dass lediglich die Heizspulen angesteuert werden, die Kochstellen zugeordnet sind, auf denen ein Aufstellgerät aufgestellt ist.

Um beispielsweise trotz gleichzeitiger Ansteuerung der Heizspulen der Kochstellen die einzelnen Kochstellen für die automatische Zuordnung voneinander unterscheiden zu können, sieht eine vorteilhafte Weiterbildung des erfindungsgemäßen Verfahrens vor, dass sich die mittels der jeweiligen Ansteuerung erzeugten Zuordnungssignale, beispielsweise Leistungsprofile, der Heizspulen der einzelnen Kochstellen voneinander unterscheiden. Hierdurch ist gewährleistet, dass die einzelnen Heizspulen und damit auch die einzelnen Kochstellen des induktiv beheizten Kochfelds für den Zweck der erfindungsgemäßen automatischen Zuordnung des mindestens einen Aufstellgeräts zu mindestens einer der Mehrzahl von Kochstellen sicher unterscheidbar sind. Dies gilt insbesondere bei der gleichzeitigen Ansteuerung der Heizspulen der Kochstellen.

Beispielsweise ist es möglich, dass die Zuordnungssignale, ob als Leistungsprofile ausgebildet oder nicht, für jede der Kochstellen der Mehrzahl von Kochstellen voneinander verschiedene Signaldauern haben. Auch eine Kombination von unterschiedlichen Merkmalen eines Zuordnungssignals, wie beispielsweise ansteigende Flanken, abfallende Flanken, Signaldauer, Maxima und/oder Minima, können für jede der Kochstellen der Mehrzahl von Kochstellen voneinander verschieden ausgebildet sein und somit für die automatische Zuordnung des mindestens einen Aufstellgeräts zu einer bestimmten Kochstelle der Mehrzahl von Kochstellen verwendet werden.

Der Vorteil bei der Verwendung von voneinander verschiedenen Zuordnungssignalen, beispielsweise von voneinander verschiedenen Leistungsprofilen, für jede der Mehrzahl von Kochstellen besteht insbesondere darin, dass die Heizspulen der Mehrzahl von Kochstellen mittels der Kochfeldsteuerung nahezu ohne zeitliche Verzögerung oder gar ohne zeitliche Verzögerung, also simultan, angesteuert werden können.

Gerade bei Flächenkochfeldern ergibt sich jedoch die Möglichkeit, dass ein Aufstellgerät nicht nur auf einer einzigen Kochstelle, sondern auf einer Mehrzahl von zueinander benachbarten Kochstellen des Kochfelds aufgestellt werden können. Dieser Umstand kann beispielsweise dadurch berücksichtigt werden, dass die voneinander verschiedenen Zuordnungssignale, beispielsweise Leistungsprofile, der Mehrzahl von Kochstellen sich derart voneinander unterscheiden, dass sich zwecks der automatischen Zuordnung sowohl die einzelnen Zuordnungssignale wie auch die auf die jeweiligen Zuordnungssignale basierenden Signalbestandteile des Antwortsignals bei der Auswertung in der Auswerteeinheit trennen lassen. Diesbezüglich sind dem Fachmann geeignete Verfahren bekannt. Diese Trennung kann auch in einer Auswerteeinheit des mindestens einen Aufstellgeräts erfolgen. Dies hat dann den Vorteil, dass die mittels der Sendeeinheit von dem jeweiligen Aufstellgerät an die Empfangseinheit zu übertragende Datenmenge reduziert ist. Bei einer höheren Komplexität ist jedoch eine Trennung in der Kochfeldsteuerung oder in dem Drittgerät von Vorteil. Bei dem Drittgerät kann es sich beispielsweise um ein Smartphone, ein Tablet, einen Computer oder um eine zentrale Benutzerschnittstelle handeln, die für die Bedienung einer Vielzahl von Küchengeräten verwendet wird.

Eine vorteilhafte Weiterbildung der vorgenannten Ausführungsform, nämlich, dass sich die mittels der jeweiligen Ansteuerung erzeugten Zuordnungssignale der Heizspulen der einzelnen Kochstellen voneinander unterscheiden, sieht vor, dass in den mittels der Ansteuerung erzeugten Zuordnungssignalen der Heizspulen der einzelnen Kochstellen jeweils eine voneinander verschiedene Verzögerungszeit codiert ist, wobei die Sendeeinheit des auf eine bestimmte Kochstelle aufgestellten Aufstellgeräts in Abhängigkeit der codierten Verzögerungszeit der Heizspule dieser Kochstelle die Sendung des Antwortsignals an die Empfangseinheit verzögert. Auf diese Weise ist eine Unterscheidung der Zuordnungssignale mit denen die einzelnen Heizspulen der Kochstellen mittels der Kochfeldsteuerung angesteuert werden, und damit eine Unterscheidung der einzelnen Kochstellen besonders einfach realisiert. Insbesondere vorteilhaft ist diese Weiterbildung bei einer gleichzeitigen Ansteuerung der Heizspulen der Kochstellen. Beispielsweise sind die Zuordnungssignale, analog zu den obigen Ausführungen, als Leistungsprofile ausgebildet.

Eine vorteilhafte Weiterbildung der letztgenannten Ausführungsform des erfindungsgemäßen Verfahrens sieht vor, dass die codierten Verzögerungszeiten der zur Ansteuerung der Heizspulen erzeugten Zuordnungssignale konfigurierbar sind. Beispielsweise könnten die codierten Verzögerungszeiten derart konfigurierbar sein, dass dadurch voneinander verschiedene Bearbeitungsdauern in einer Mehrzahl von auf Kochstellen des Kochfelds gleichzeitig aufgestellten Aufstellgeräten kompensierbar ist. Entsprechend wäre es möglich, dass die jeweiligen Antwortsignale der einzelnen Aufstellgeräte mit einem einheitlichen Offset zwischen der Ansteuerung der Heizspulen jeder der Mehrzahl von Kochstellen und dem Empfang des Antwortsignals mittels der Empfangseinheit verarbeitet werden können. Beispielsweise könnte die vorgenannte Konfiguration darüber hinaus dynamisch angepasst werden, um bei wechselnden Konstellationen von dem mindestens einen auf das Kochfeld aufgestellten Aufstellgerät eine möglichst kurze Reaktionszeit des Kochfelds, nämlich eine möglichst kurze automatische Zuordnung des mindestens einen Aufstellgeräts zu einer bestimmten Kochstelle der Mehrzahl von Kochstellen, zu ermöglichen.

Eine andere vorteilhafte Weiterbildung des erfindungsgemäßen Verfahrens sieht vor, dass die Zuordnung des auf eine bestimmte Kochstelle der Mehrzahl von Kochstellen aufgestellten Aufstellgeräts zu dieser bestimmten Kochstelle in der Auswerteeinheit mittels einer Gesamtlaufzeit von der Ansteuerung der dieser Kochstelle zugeordneten mindestens einen Heizspule mit dem Zuordnungssignal bis zu dem Empfang des mittels der Empfangseinheit empfangenen Antwortsignals des auf diese Kochstelle aufgestellten Aufstellgeräts erfolgt. Hierdurch ist eine alternative oder zusätzliche Möglichkeit der automatischen Zuordnung von dem mindestens einen Aufstellgerät zu einer bestimmten Kochstelle der Mehrzahl von Kochstellen des Kochfelds geschaffen. Entsprechend ist es denkbar, dass die automatische Zuordnung auf Basis von voneinander verschiedenen Zuordnungssignalen der Heizspulen der einzelnen Kochstellen des Kochfelds und/oder auf Basis von Gesamtlaufzeiten für jede mögliche Paarung der Mehrzahl von Kochstellen mit dem mindestens einen Aufstellgerät erfolgt.

Eine vorteilhafte Weiterbildung der vorgenannten Ausführungsform sieht vor, dass für jede mögliche Paarung der Mehrzahl von Kochstellen mit dem mindestens einen Aufstellgerät eine Gesamtlaufzeit vorher festgelegt und in einem mit der Kochfeldsteuerung oder dem Drittgerät in Signalübertragungsverbindung stehenden Speicher abgespeichert ist. Auf diese Weise ist die Erfindung besonders einfach realisiert. Beispielsweise kann der Speicher als eine mit der Kochfeldsteuerung oder dem Drittgerät signalübertragend verbundene Cloud ausgebildet sein. Die Gesamtlaufzeiten können in dem Speicher dabei als eine Liste oder als ein Algorithmus abgespeichert sein. Ein Algorithmus ist gegenüber einer Liste dann von Vorteil, wenn in dem Speicher eine große Anzahl von Korrelationen zu handhaben ist.

Eine vorteilhafte Weiterbildung des erfindungsgemäßen Verfahrens nach einer der beiden letztgenannten Ausführungsformen sieht vor, dass eine von einem auf eine bestimmte Kochstelle der Mehrzahl von Kochstellen aufgestellten Aufstellgerät abhängige Teillaufzeit der Gesamtlaufzeit mittels des Antwortsignals von der Sendeeinheit dieses Aufstellgeräts an die Empfangseinheit übertragen und die Gesamtlaufzeit in der Auswerteeinheit mittels der Teillaufzeit ermittelt wird. Hierdurch ist es möglich, spezifische Eigenschaften des mindestens einen Aufstellgeräts, beispielsweise die verbaute Hardware und/oder die aufgespielte Firmware, die die von dem jeweiligen Aufstellgerät abhängige Teillaufzeit der Gesamtlaufzeit beeinflussen können, bei der Ermittlung der Gesamtlaufzeit zu berücksichtigen. Entsprechend ist die automatische Zuordnung des mindestens einen Aufstellgeräts zu einer bestimmten Kochstelle der Mehrzahl von Kochstellen qualitativ verbessert.

Eine besonders vorteilhafte Weiterbildung der drei letztgenannten Ausführungsformen sieht vor, dass die Identifizierung eines bestimmten Aufstellgeräts des mindestens einen Aufstellgeräts mittels der Auswerteeinheit in Abhängigkeit der Gesamtlaufzeit für jede mögliche Paarung der Mehrzahl von Kochstellen mit dem mindestens einen Aufstellgerät erfolgt, wobei die Gesamtlaufzeit für jede mögliche Paarung der Mehrzahl von Kochstellen mit dem mindestens einen Aufstellgerät voneinander verschieden ist. Auf diese Weise ist das erfindungsgemäße Verfahren vereinfacht, da die Auswertung der Gesamtlaufzeit in der Auswerteeinheit nicht nur für die automatische Zuordnung dieses individuellen Aufstellgeräts zu einer bestimmten Kochstelle der Mehrzahl von Kochstellen des Kochfelds, sondern auch für die Identifizierung dieses individuellen Aufstellgeräts dient.

Eine andere vorteilhafte Weiterbildung des erfindungsgemäßen Verfahrens sieht vor, dass die Sendeeinheit des Aufstellgeräts in Abhängigkeit einer in der Sendeeinheit abgespeicherten individuellen Verzögerungszeit die Sendung des Antwortsignals an die Empfangseinheit verzögert. Hierdurch ist auch bei mehreren auf eine gemeinsame Kochstelle des Kochfelds aufgestellten Aufstellgeräten eine sichere Zuordnung der einzelnen Aufstellgeräte zu dieser Kochstelle des Kochfelds ermöglicht.

Eine weitere vorteilhafte Weiterbildung des erfindungsgemäßen Verfahrens sieht vor, dass das Antwortsignal in der Sendeeinheit zwischengespeichert wird. Auf diese Weise ist beispielsweise ein geordnetes Senden bei der gleichzeitigen Verwendung von mehreren Aufstellgeräten auf dem Kochfeld in einer vorher festgelegten Reihenfolge ermöglicht. Ein Datenverlust durch gleichzeitiges Senden der einzelnen Aufstellgeräte ist dann wirksam verhindert.

Um auch zeitlich unabhängig von einer Bestromung des mindestens einen Aufstellgeräts mittels der mindestens einen Heizspule und der Induktionsspule des Aufstellgeräts senden zu können, sieht eine vorteilhafte Weiterbildung des erfindungsgemäßen Verfahrens vor, dass die mittels der mindestens einen Heizspule des Kochfelds in die Induktionsspule des auf dieser Kochstelle aufgestellten Aufstellgeräts eingekoppelte Betriebsenergie für die Sendeeinheit zumindest teilweise in einem Energiespeicher des Aufstellgeräts gespeichert wird.

Eine andere vorteilhafte Weiterbildung des erfindungsgemäßen Verfahrens sieht vor, dass das Antwortsignal eine zusätzliche Information zu einer Betriebseinstellung des Aufstellgeräts und/oder einem Betriebsparameter des Aufstellgeräts und/oder einem Betriebszustand des Aufstellgeräts beinhaltet.

Wie oben bereits erläutert, ist die Ansteuerung der Heizspulen der Kochstellen des Kochfelds in weiten geeigneten Grenzen frei wählbar. Eine besonders vorteilhafte Weiterbildung des erfindungsgemäßen Verfahrens sieht vor, dass die Heizspulen der Kochstellen des Kochfelds zur automatischen Zuordnung in Abhängigkeit mindestens eines von dem Kochfeld und/oder dem Aufstellgerät und/oder dem Drittgerät abhängigen Auslöseereignisses mittels der Kochfeldsteuerung angesteuert werden. Hierdurch ist eine situationsgerechte Ansteuerung der Heizspulen der Kochstellen ermöglicht.

Beispielsweise kann es in vorteilhafterweise vorgesehen sein, dass das Auslöseereignis bei eingeschaltetem Kochfeld in Abhängigkeit mindestens eines vorher festgelegten Zeitintervalls kontinuierlich erfolgt. Auf diese Weise ist eine automatische Zuordnung mindestens eines Aufstellgeräts zu mindestens einer Kochstelle des Kochfelds während der gesamten Betriebszeit des Kochfelds auf schaltungstechnisch einfache Art sichergestellt.

Eine vorteilhafte Weiterbildung der beiden letztgenannten Ausführungsformen des erfindungsgemäßen Verfahrens sieht vor, dass das Auslöseereignis in Abhängigkeit mindestens einer Veränderung einer Zuordnung von dem mindestens einen Aufstellgerät zu mindestens einer der Kochstellen der Mehrzahl der Kochstellen erfolgt. Hierdurch ist die erfindungsgemäße automatische Zuordnung in der Quantität reduziert, ohne dass dabei die Qualität der automatischen Zuordnung insgesamt leidet.

Eine weitere vorteilhafte Weiterbildung des erfindungsgemäßen Verfahrens sieht vor, dass die Heizspule mittels der Kochfeldsteuerung in einem Standby-Modus des induktiven Kochfelds nicht angesteuert und in einem Betriebsmodus des induktiven Kochfelds zur Beheizung eines auf der Kochstelle aufgestellten Aufstellgeräts mit der Sendeeinheit angesteuert wird, wobei das induktive Kochfeld mittels der Kochfeldsteuerung zusätzlich in einem Bereitschaftsmodus betrieben wird, und wobei das induktive Kochfeld mittels der von der Empfangseinheit der Kochfeldsteuerung empfangenen Wecksignals von dem Standby-Modus in den Bereitschaftsmodus überführt wird, und wobei die Heizspule in dem Bereitschaftsmodus mittels der Kochfeldsteuerung derart angesteuert wird, dass zum einen eine für einen Zubereitungsvorgang wirksame Beheizung des Aufstellgeräts verhindert ist und zum anderen eine Signalübertragung zwischen der Sendeeinheit und der Empfangseinheit mittels der Heizspule ermöglicht ist. Aufgrund des Vorsehens eines erfindungsgemäßen Bereitschaftsmodus ist die Bedienung des induktiven Kochfelds und damit der Zubereitungsvorgang auf dem induktiven Kochfeld wesentlich vereinfacht, ohne dabei die Sicherheit zu beeinträchtigen.

Eine vorteilhafte Weiterbildung der vorgenannten Ausführungsform des erfindungsgemäßen Verfahrens sieht vor, dass die Heizspule in dem Bereitschaftsmodus mittels der Kochfeldsteuerung derart angesteuert wird, dass eine Übertragung einer Betriebsenergie von dem induktiven Kochfeld zu dem Aufstellgerät, das auf der dieser Heizspule zugeordneten Kochstelle aufgestellt ist, mittels der Heizspule ermöglicht ist. Auf diese Weise ist es möglich, das Aufstellgerät mittels des induktiven Kochfelds mit der für den Betrieb des Aufstellgeräts erforderlichen Betriebsenergie zu versorgen. Entsprechend benötigt das Aufstellgerät keine oder lediglich eine sehr kleine und damit platzsparende Energiequelle.

Grundsätzlich ist das Wecksignal zur Überführung des induktiven Kochfelds von dessen Standby-Modus in dessen Bereitschaftsmodus in weiten geeigneten Grenzen frei wählbar. Eine vorteilhafte Weiterbildung des erfindungsgemäßen Verfahrens sieht vor, dass das Wecksignal mittels einer Betätigung eines an dem Aufstellgerät angeordneten und mit der Sendeeinheit in Signalübertragungsverbindung stehenden Bedienelements und/oder mittels eines an dem Aufstellgerät angeordneten und mit der Sendeeinheit in Signalübertragungsverbindung stehenden Bewegungssensors und/oder mittels einer Betätigung eines an dem induktiven Kochfeld angeordneten und mit der Empfangseinheit der Kochfeldsteuerung in Signalübertragungsverbindung stehenden Bedienelements und/oder mittels einer Betätigung eines an einem Drittgerät angeordneten und mit der Empfangseinheit der Kochfeldsteuerung in Signalübertragungsverbindung stehenden Bedienelements erzeugt wird. Auf diese Weise ist das Wecksignal beispielsweise mittels des Aufstellgeräts auslösbar. Ein Benutzer könnte eine entsprechende Taste des Aufstellgeräts drücken. Denkbar ist auch, dass eine, beispielsweise mittels eines als Beschleunigungssensor ausgebildeten Bewegungssensors, detektierte Bewegung des Aufstellgeräts dazu verwendet wird, um das Wecksignal auszulösen. Darüber hinaus ist es möglich, dass das Wecksignal auch mittels eines Drittgeräts, beispielsweise mittels eines Smartphones, ausgelöst wird. Ferner ist auch das Auslösen des Wecksignals mittels einer Betätigung am induktiven Kochfeld, beispielsweise einer Betätigung einer Taste des induktiven Kochfelds, auslösbar. Entsprechend ergibt sich eine Vielzahl von Möglichkeiten, um das induktive Kochfeld von dessen Standby-Modus in den Bereitschaftsmodus zu überführen.

Grundsätzlich ist die Versorgung der Heizspule mit elektrischer Leistung nach Art und Funktionsweise in weiten geeigneten Grenzen frei wählbar. Eine weitere vorteilhafte Weiterbildung des erfindungsgemäßen Verfahrens sieht vor, dass die elektrische Leistung, mit der die Kochfeldsteuerung die Heizspule in dem Bereitschaftsmodus ansteuert, einen Mittelwert von kleiner oder gleich 30 W, bevorzugt kleiner oder gleich 15 W, aufweist. Hierdurch ist gewährleistet, dass die der Heizspule in dem Bereitschaftsmodus des induktiven Kochfelds zugeführte elektrische Leistung sicherheitstechnisch unbedenklich ist.

Eine andere vorteilhafte Weiterbildung des erfindungsgemäßen Verfahrens sieht vor, dass die elektrische Leistung, mit der die Kochfeldsteuerung die Heizspule in dem Bereitschaftsmodus ansteuert, ein Pausen-Leistungs-Verhältnis von größer oder gleich 1000:1 aufweist. Beispielsweise könnte die Pause, also die Unterbrechung der elektrischen Leistungszufuhr zu der Heizspule, 2 s betragen, während das Zeitintervall, in dem die elektrische Leistung an die Heizspule abgegeben wird, 160 µs beträgt. Die Pause ist also wesentlich länger als das Zeitintervall für die Leistungsübertragung. Auf diese Weise ist alternativ oder zusätzlich zu der vorgenannten Ausführungsform gewährleistet, dass die der Heizspule in dem Bereitschaftsmodus des induktiven Kochfelds zugeführte elektrische Leistung sicherheitstechnisch unbedenklich ist.

Eine besonders vorteilhafte Weiterbildung des erfindungsgemäßen Verfahrens sieht vor, dass die automatische Zuordnung mindestens eines Aufstellgeräts zu mindestens einer Kochstelle des induktiven Kochfelds mit einer Mehrzahl von mittels jeweils mindestens einer Heizspule induktiv beheizten Kochstellen in dem Bereitschaftsmodus erfolgt. Hierdurch ist es möglich, während des Bereitschaftsmodus festzustellen, ob ein Aufstellgerät auf einer Kochstelle des induktiven Kochfelds aufgestellt worden ist oder nicht. Sofern das Aufstellgerät auf der Kochstelle aufgestellt ist, kann dann beispielsweise das induktive Kochfeld automatisch von dem Bereitschaftsmodus in den Betriebsmodus überführt werden, so dass das Aufstellgerät mittels der dieser Kochstelle zugeordneten Heizspule wirksam für einen Zubereitungsvorgang mittels dieses Aufstellgeräts bestromt werden kann. Anderenfalls, also wenn keine Zuordnung zwischen einem Aufstellgerät und einer Kochstelle des induktiven Kochfelds erfolgt, verbleibt das induktive Kochfeld in dem Bereitschaftsmodus.

Eine besonders vorteilhafte Weiterbildung des erfindungsgemäßen Verfahrens sieht vor, dass das induktive Kochfeld mittels der Kochfeldsteuerung und in Abhängigkeit von dem in dem Bereitschaftsmodus mittels der Empfangseinheit empfangenen Antwortsignal automatisch von dem Bereitschaftsmodus in den Betriebsmodus überführt wird. Hierdurch ist der Bedienkomfort bei dem erfindungsgemäßen induktiven Kochfeld weiter gesteigert, ohne dass die Sicherheit bei der Bedienung des induktiven Kochfelds beeinträchtigt ist.

Eine andere vorteilhafte Weiterbildung des erfindungsgemäßen Verfahrens sieht vor, dass das induktive Kochfeld mittels der Kochfeldsteuerung zusätzlich in einem Demonstrationsmodus betrieben wird, wobei das induktive Kochfeld mittels eines von der Empfangseinheit der Kochfeldsteuerung empfangenen Umschaltsignals in den Demonstrationsmodus überführt wird, und wobei der Demonstrationsmodus im Wesentlichen dem Bereitschaftsmodus entspricht, jedoch eine automatische Überführung von dem Demonstrationsmodus in den Betriebsmodus nicht möglich ist. Auf diese Weise ist es möglich, die Funktionalität des induktiven Kochfelds in dessen Bereitschaftsmodus zu Demonstrationszwecken, beispielsweise auf Messen, nutzen zu können, ohne die Gefahr, dass das induktive Kochfeld in ungewünschter Weise in den Betriebsmodus überführt wird. Entsprechend ist die Sicherheit auch in dem Demonstrationsmodus des induktiven Kochfelds vollumfänglich gewährleistet.

Eine weitere vorteilhafte Weiterbildung des erfindungsgemäßen Verfahrens sieht vor, dass die Ansteuerung der Heizspule in Abhängigkeit von einem mittels eines Sensors erkannten Aufstellereignisses oder einer mittels des Sensors erkannten Unterlage, auf der das Aufstellgerät aufgestellt worden ist, erfolgt. Der damit erreichbare Vorteil besteht insbesondere darin, dass die Nutzung eines Systems, umfassend ein induktives Kochfeld und ein Aufstellgerät, verbessert ist. Beispielsweise ist der Bedienkomfort für einen Benutzer derartiger Systeme gesteigert. Aufgrund der automatischen Erkennung eines Aufstellereignisses oder eines Aufstellereignisses und der Beschaffenheit einer Unterlage, auf der das Aufstellgerät aufgestellt worden ist, ist es möglich, die Handhabung des erfindungsgemäßen Aufstellgeräts wie auch des erfindungsgemäßen Systems zu vereinfachen. Beispielsweise ist es damit möglich, einen Eingriff eines Benutzers automatisch zu erkennen und für die weitere Steuerung oder Regelung des Systems zu verwenden. Ferner können nachfolgende Schritte in der Zubereitung eines in dem Aufstellgerät befindlichen Mediums mittels des induktiven Kochfelds antizipiert werden, um so die weitere Zubereitung zu vereinfachen. Auch ist es mittels der Erfindung möglich, beispielsweise das induktive Kochfeld vor einer unsachgemäßen Handhabung zu schützen, so dass eine etwaige Beschädigung des induktiven Kochfelds sowie möglicherweise die Sicherheit gefährdende Situationen wirksam verhindert sind. Darüber hinaus ist es mittels der Erfindung möglich, den Energieverbrauch des Aufstellgeräts und des induktiven Kochfelds zu reduzieren, beispielsweise dadurch, dass lediglich dann eine Signalübertragung zwischen dem Aufstellgerät und der Kochfeldsteuerung des induktiven Kochfelds erfolgt, wenn ein Aufstellereignis oder ein Aufstellereignis und die Beschaffenheit einer Unterlage, auf der das Aufstellgerät aufgestellt worden ist, mittels des Sensors erkannt worden ist/sind. Der Begriff "Aufstellgerät" ist weit auszulegen und umfasst insbesondere alle denkbaren Arten von Kochgeschirr, beispielsweise Kochtöpfe oder Bratpfannen.

Grundsätzlich ist es denkbar, dass die Ansteuerung der Heizspule in Abhängigkeit von einem mittels des Sensors erkannten Aufstellereignisses oder einer mittels des Sensors erkannten Unterlage, auf der das Aufstellgerät aufgestellt worden ist, dahingehend erfolgt, dass die Heizspule beispielsweise direkt mit einer für einen Zubereitungsvorgang ausreichenden elektrischen Leistung bestromt wird. Ferner ist es denkbar, dass bei einer Erkennung der Aufstellung des Aufstellgeräts auf eine Kochstelle des induktiven Kochfelds und eines übermäßigen Schwenkens des Aufstellgeräts mittels des Sensors die Zufuhr von elektrischer Leistung automatisch reduziert wird, um beispielsweise Bauteile eines Schwingkreises des induktiven Kochfelds vor einer Beschädigung zu schützen.

Eine vorteilhafte Weiterbildung des erfindungsgemäßen Verfahrens sieht vor, dass in Abhängigkeit von einem mittels des Sensors erkannten Aufstellereignisses oder einer mittels des Sensors erkannten Unterlage, auf der das Aufstellgerät aufgestellt worden ist, eine Verfahrensroutine zur automatischen Zuordnung des Aufstellgeräts zu mindestens einer Kochstelle des induktiven Kochfelds gestartet wird. Auf diese Weise ist es beispielsweise möglich, die Heizspule zunächst mit einer reduzierten elektrischen Leistung anzusteuern, die zwar ausreichend ist, um eine automatische Zuordnung des Aufstellgeräts zu mindestens einer Kochstelle des induktiven Kochfelds vorzunehmen, jedoch keine für einen Zubereitungsvorgang wirksame Aufheizung des Aufstellgeräts bewirkt. Beispielsweise ist dies mittels eines geeigneten Pausen-Leistungs-Verhältnisses realisierbar. Die Heizspule wird erst dann mit der für einen Zubereitungsvorgang ausreichenden elektrischen Leistung bestromt, wenn die Verfahrensroutine eine automatische Zuordnung des Aufstellgeräts zu der Kochstelle, die zu der vorgenannten Heizspule korrespondiert, ergibt. Entsprechend ist die Sicherheit weiter verbessert.

Die Verfahrensroutine zur automatischen Zuordnung des Aufstellgeräts zu mindestens einer Kochstelle des induktiven Kochfelds ist in weiten geeigneten Grenzen frei wählbar. Eine vorteilhafte Weiterbildung der vorgenannten Ausführungsform des erfindungsgemäßen Verfahrens sieht vor, dass in der Verfahrensroutine zur automatischen Zuordnung des Aufstellgeräts zu mindestens einer Kochstelle des induktiven Kochfelds Ausgangssignale des Sensors verwendet werden. Beispielsweise könnten mittels des Sensors detektierte Vibrationen des Aufstellgeräts während der Verfahrensroutine ausgewertet werden, um so die oben genannte Zuordnung zu erzielen.

Eine vorteilhafte Weiterbildung des erfindungsgemäßen Verfahrens sieht vor, dass in Abhängigkeit von einem mittels des Sensors erkannten Aufstellereignisses oder einer mittels des Sensors erkannten Unterlage, auf der das Aufstellgerät aufgestellt worden ist, mittels der Aufstellgerät-Ausgabeeinheit und/oder mittels der Kochfeld-Ausgabeeinheit eine Information an den Benutzer ausgegeben wird. Hierdurch ist eine Rückmeldung, beispielsweise über das Vorliegen eines Aufstellereignisses oder die Beschaffenheit der Unterlage, an den Benutzer des Aufstellgeräts ermöglicht. Beispielsweise ist es denkbar, dass bei einem noch Restwärme aufweisenden Aufstellgerät als Information ein Warnsignal ausgegeben wird, wenn mittels des Sensors erkannt worden ist, dass es sich bei der Unterlage, auf der das Aufstellgerät aufgestellt worden ist, nicht um eine Kochstelle des induktiven Kochfelds, sondern um eine Unterlage aus Holz oder Stoff handelt.

Eine vorteilhafte Weiterbildung des erfindungsgemäßen Verfahrens sieht vor, dass in Abhängigkeit von Ausgangssignalen des Sensors eine Füllmenge in dem Aufstellgerät und/oder ein für die Zubereitung des Mediums relevanter Zustand des Mediums detektiert wird/werden. Hierdurch ist die Funktionalität des Sensors weiter gesteigert. Beispielsweise könnte alternativ oder zusätzlich zu der Füllmenge des Mediums in dem Aufstellgerät auch detektiert werden, ob das Medium seinen Siedepunkt erreicht hat. Auch ist eine Erfassung des Siedeeindrucks des Mediums, also des Siedeverhaltens des Mediums, insbesondere in Bezug auf die zugeführte Wärmeleistung, denkbar.

Ferner kann das erfindungsgemäße Verfahren dazu verwendet werden, um eine Geräuschemission bei dem Zubereitungsvorgang zu vermeiden. Beispielsweise, in dem eine Arbeitsfrequenz der Heizspule in Abhängigkeit von Ausgangssignalen des Sensors dahingehend angepasst wird, dass ein Resonanzfall bei dem individuellen Aufstellgerät vermieden wird.

Eine vorteilhafte Weiterbildung des erfindungsgemäßen Verfahrens sieht vor, dass die Auswertung von Ausgangssignalen des Sensors in dem Aufstellgerät erfolgt. Auf diese Weise ist es nicht erforderlich, dass die Ausgangssignale des Sensors kontinuierlich oder zumindest in regelmäßigen Zeitabständen von dem Aufstellgerät zu der Kochfeldsteuerung oder einem Drittgerät übertragen werden müssen. Jedoch ist es auch möglich, dass die Auswertung der Ausgangssignale des Sensors zumindest teilweise in der Kochfeldsteuerung und/oder in einem mit der Kochfeldsteuerung in Signalübertragungsverbindung stehenden Drittgerät erfolgt.

Das erfindungsgemäße System umfasst wenigstens ein Aufstellgerät für ein induktives Kochfeld und ein induktives Kochfeld mit mindestens einer Kochstelle, zur Durchführung des Verfahrens zur automatischen Zuordnung mindestens eines Aufstellgeräts zu mindestens einer Kochstelle eines induktiven Kochfelds mit einer Mehrzahl von mittels jeweils mindestens einer Heizspule induktiv beheizten Kochstellen. Dabei weist das Kochfeld für jede Kochstelle mindestens eine Heizspule zur induktiven Beheizung der Kochstellen und eine Kochfeldsteuerung zur Ansteuerung der Heizspule in einem Betriebsmodus des induktiven Kochfelds zur Beheizung eines auf der Kochstelle aufgestellten Aufstellgeräts auf. Weiterhin weist das Aufstellgerät eine mit einer Heizspule des induktiven Kochfelds induktiv koppelbare Induktionsspule und eine Sendeeinheit auf. Die Kochfeldsteuerung ist zur Ansteuerung der Heizspulen mit einem Zuordnungssignal eingerichtet. Die Sendeeinheit des Aufstellgeräts ist mittels von mindestens einer der Heizspulen in die Induktionsspule des Aufstellgeräts induzierten Spannung mit einer Betriebsenergie versorgbar, wobei die Spannung von einer Heizspule induziert wird, welche der Kochstelle zugeordnet ist, auf welcher das Aufstellgeräts aufgestellt ist. Mittels der mit der Betriebsenergie versorgten Sendeeinheit des Aufstellgeräts wird ein das Aufstellgerät identifizierendes Antwortsignal an eine Empfangseinheit der Kochfeldsteuerung oder eines mit der Kochfeldsteuerung in Signalübertragungsverbindung stehenden Drittgeräts gesendet, wobei das Antwortsignal zu einem mittels mindestens einer der dieser Kochstelle zugeordneten Heizspulen in die Induktionsspule des Aufstellgeräts induzierten Zuordnungssignal korreliert. Dabei wird das Antwortsignal in einer mit der Empfangseinheit signalübertragend verbundenen Auswerteeinheit der Kochfeldsteuerung oder dem Drittgerät mit dem Zuordnungssignal der mindestens einen Heizspule dieser Kochstelle verglichen und in Abhängigkeit dieses Vergleichs das identifizierte Aufstellgerät dieser Kochstelle zugeordnet.

Das induktive Kochfeld, umfasst mindestens eine Kochstelle, mindestens eine der Kochstelle zugeordnete Heizspule und eine Kochfeldsteuerung zur Ansteuerung der Heizspule in einem Betriebsmodus des induktiven Kochfelds zur Beheizung eines auf der Kochstelle aufgestellten Aufstellgeräts mit einer Sendeeinheit, wobei die Kochfeldsteuerung derart ausgebildet und eingerichtet ist, dass das induktive Kochfeld zusätzlich in einem Standby-Modus betreibbar ist, wobei eine Ansteuerung der Heizspule in dem Standby-Modus nicht ermöglicht ist, dadurch gekennzeichnet, dass die Kochfeldsteuerung derart ausgebildet und eingerichtet ist, dass das induktive Kochfeld zusätzlich in einem Bereitschaftsmodus betreibbar ist, wobei das induktive Kochfeld mittels eines von einer Empfangseinheit der Kochfeldsteuerung empfangenen Wecksignals von dem Standby-Modus in den Bereitschaftsmodus überführbar ist, und wobei die Heizspule in dem Bereitschaftsmodus mittels der Kochfeldsteuerung derart ansteuerbar ist, dass zum einen eine für einen Zubereitungsvorgang wirksame Beheizung des Aufstellgeräts verhindert ist und zum anderen eine Signalübertragung zwischen der Sendeeinheit und der Empfangseinheit mittels der Heizspule ermöglicht ist. Wie oben bereits erläutert, ist aufgrund des Vorsehens eines Bereitschaftsmodus die Bedienung des induktiven Kochfelds und damit der Zubereitungsvorgang auf dem induktiven Kochfeld wesentlich vereinfacht, ohne dabei die Sicherheit zu beeinträchtigen.

Eine vorteilhafte Weiterbildung des induktiven Kochfelds sieht vor, dass die Heizspule in dem Bereitschaftsmodus mittels der Kochfeldsteuerung derart ansteuerbar ist, dass eine Übertragung einer Betriebsenergie von dem induktiven Kochfeld zu dem Aufstellgerät, das auf der dieser Heizspule zugeordneten Kochstelle aufgestellt ist, mittels der Heizspule ermöglicht ist. Wie oben bereits erläutert, ist es auf diese Weise möglich, das Aufstellgerät mittels des induktiven Kochfelds mit der für den Betrieb des Aufstellgeräts erforderlichen Betriebsenergie zu versorgen. Entsprechend benötigt das Aufstellgerät keine oder lediglich eine sehr kleine und damit platzsparende Energiequelle.

Eine besonders vorteilhafte Weiterbildung des induktiven Kochfelds sieht vor, dass das induktive Kochfeld mittels der Kochfeldsteuerung und in Abhängigkeit von einem in dem Bereitschaftsmodus mittels der Empfangseinheit empfangenen Antwortsignal automatisch von dem Bereitschaftsmodus in den Betriebsmodus überführbar ist. Hierdurch ist der Bedienkomfort bei dem erfindungsgemäßen induktiven Kochfeld weiter gesteigert, ohne dass die Sicherheit bei der Bedienung des induktiven Kochfelds beeinträchtigt ist.

Das Aufstellgerät für ein induktives Kochfeld umfasst eine mit einer Heizspule des induktiven Kochfelds induktiv koppelbare Induktionsspule und eine Sendeeinheit, dadurch gekennzeichnet, dass das Aufstellgerät mindestens einen Sensor zur Erkennung eines Aufstellereignisses oder zur Erkennung eines Aufstellereignisses und zur Erkennung der Beschaffenheit einer Unterlage, auf der das Aufstellgerät aufgestellt worden ist, aufweist. Aufgrund der automatischen Erkennung eines Aufstellereignisses oder eines Aufstellereignisses und der Beschaffenheit einer Unterlage, auf der das Aufstellgerät aufgestellt worden ist, ist es möglich, die Handhabung des Aufstellgeräts wie auch des erfindungsgemäßen Systems zu vereinfachen. Beispielsweise ist es damit möglich, einen Eingriff eines Benutzers automatisch zu erkennen und für die weitere Steuerung oder Regelung des Systems zu verwenden. Ferner können nachfolgende Schritte in der Zubereitung eines in dem Aufstellgerät befindlichen Mediums mittels des induktiven Kochfelds antizipiert werden, um so die weitere Zubereitung zu vereinfachen. Auch ist es mittels der Erfindung möglich, beispielsweise das induktive Kochfeld vor einer unsachgemäßen Handhabung zu schützen, so dass eine etwaige Beschädigung des induktiven Kochfelds sowie möglicherweise die Sicherheit gefährdende Situationen wirksam verhindert sind. Darüber hinaus ist es mittels der Erfindung möglich, den Energieverbrauch des Aufstellgeräts und des induktiven Kochfelds zu reduzieren, beispielsweise dadurch, dass lediglich dann eine Signalübertragung zwischen dem Aufstellgerät und der Kochfeldsteuerung des induktiven Kochfelds erfolgt, wenn ein Aufstellereignis oder ein Aufstellereignis und die Beschaffenheit einer Unterlage, auf der das Aufstellgerät aufgestellt worden ist, mittels des Sensors erkannt worden ist/sind. Der Begriff "Aufstellgerät" ist weit auszulegen und umfasst insbesondere alle denkbaren Arten von Kochgeschirr, beispielsweise Kochtöpfe oder Bratpfannen.

Das Aufstellgerät ist nach Art, Funktionsweise, Form, Material und Dimensionierung in weiten geeigneten Grenzen frei wählbar. Dies gilt auch für den Sensor des Aufstellgeräts. Eine vorteilhafte Weiterbildung des Aufstellgeräts sieht vor, dass der Sensor als ein Schwingungssensor und/oder als ein Beschleunigungssensor ausgebildet ist. Auf diese Weise ist der Sensor auf einfache und gleichzeitig funktionssichere Art realisiert. Ferner ist es damit möglich, nachfolgende Schritte in der Zubereitung eines in dem Aufstellgerät befindlichen Mediums mittels des induktiven Kochfelds verbessert zu antizipieren, um so die weitere Zubereitung zusätzlich zu vereinfachen. Darüber hinaus ist mittels der Erfindung gemäß dieser Weiterbildung der Schutz des induktiven Kochfelds vor einer unsachgemäßen Handhabung weiter verbessert, so dass eine etwaige Beschädigung des induktiven Kochfelds sowie möglicherweise die Sicherheit gefährdende Situationen noch wirksamer verhindert sind.

Zweckmäßigerweise ist es vorgesehen, dass der mindestens eine Sensor an einem Griff des Aufstellgeräts und/oder an einem Gefäß des Aufstellgeräts zur Aufnahme eines für die Zubereitung mittels des Aufstellgeräts vorgesehenen Mediums angeordnet ist. Eine Anordnung des Sensors an dem Griff des Aufstellgeräts hat beispielsweise den Vorteil, dass der Sensor in einem thermisch isolierten Bereich angeordnet ist. Eine Anordnung des Sensors an dem Gefäß des Aufstellgeräts hat wiederum den Vorteil, dass der Sensor näher zu dem Ort der Krafteinleitung bei dem Aufstellen des Aufstellgeräts auf die Unterlage, beispielsweise einer Kochstelle des induktiven Kochfelds, angeordnet ist.

Eine weitere vorteilhafte Weiterbildung des Aufstellgeräts sieht vor, dass das Aufstellgerät zusätzlich ein Bedienelement zur manuellen Bedienung durch den Benutzer aufweist, wobei sich der Funktionsumfang des Sensors mit dem Funktionsumfang des Bedienelements zumindest teilweise überschneidet. Hierdurch ist eine Redundanz zu dem Sensor geschaffen. Ferner ist es beispielsweise denkbar, dass das Bedienelement zum Ausschalten des Aufstellgeräts dient.

Eine andere vorteilhafte Weiterbildung des Aufstellgeräts sieht vor, dass das Aufstellgerät derart ausgebildet und eingerichtet ist, dass die Sendeeinheit und/oder der Sensor mittels der Induktionsspule mit einer Betriebsenergie versorgbar ist/sind. Auf diese Weise ist es möglich, dass lediglich ein kleiner und damit platzsparender Energiespeicher zur Speicherung der Betriebsenergie für das Aufstellgerät ausreichend ist.

Entsprechend sieht eine vorteilhafte Weiterbildung des erfindungsgemäßen Systems vor, dass die Sendeeinheit und/oder die Messeinheit und/oder der Sensor bei einer mittels der Heizspule in die Induktionsspule des auf der dieser Heizspule zugeordneten Kochstelle aufgestellten Aufstellgeräts induzierten Spannung mit einer Betriebsenergie versorgbar ist/sind.

Ferner sieht eine vorteilhafte Weiterbildung des Aufstellgeräts vor, dass das Aufstellgerät eine Aufstellgerät-Ausgabeeinheit zur Ausgabe von Informationen an den Benutzer des Aufstellgeräts aufweist, wobei in Abhängigkeit von einem mittels des Sensors erkannten Aufstellereignisses oder einer mittels des Sensors erkannten Unterlage, auf der das Aufstellgerät aufgestellt worden ist, mittels der Aufstellgerät-Ausgabeeinheit eine Information an den Benutzer ausgebbar ist. Hierdurch ist eine Rückmeldung, beispielsweise über das Vorliegen eines Aufstellereignisses oder die Beschaffenheit der Unterlage, an den Benutzer des Aufstellgeräts ermöglicht. Beispielsweise ist es denkbar, dass bei einem noch Restwärme aufweisenden Aufstellgerät als Information ein Warnsignal ausgegeben wird, wenn mittels des Sensors erkannt worden ist, dass es sich bei der Unterlage, auf der das Aufstellgerät aufgestellt worden ist, nicht um eine Kochstelle des induktiven Kochfelds, sondern um eine Unterlage aus Holz oder Stoff handelt.

Das erfindungsgemäße System mit dem induktiv beheizten Kochfeld und dem mindestens einen Aufstellgerät ist nach Art, Funktion, Dimensionierung, Material, Anordnung und Anzahl der einzelnen Systemkomponenten in weiten geeigneten Grenzen frei wählbar. Dies gilt insbesondere für das mindestens eine Aufstellgerät.

Eine besonders vorteilhafte Weiterbildung des erfindungsgemäßen Systems sieht vor, dass das Aufstellgerät als ein Kochgeschirr ausgebildet ist. Auf diese Weise ist das Aufstellgerät besonders einfach realisiert. Darüber hinaus kann das Aufstellgerät nicht nur die Funktion von dessen automatischer Zuordnung zu mindestens einer der Mehrzahl von Kochstellen des Kochfelds, sondern auch die Funktion als ein Kochgeschirr erfüllen. Somit ist das erfindungsgemäße System vereinfacht, in den Bauteilen reduziert und damit kostengünstiger realisierbar. Das Kochgeschirr ist dabei nach Art, Funktion, Dimensionierung, Material und Anordnung in weiten geeigneten Grenzen frei wählbar. Beispielsweise kann das Kochgeschirr als ein Kochtopf, eine Pfanne, ein Bräter oder ein Wasserkocher ausgebildet sein. Diese Aufzählung ist lediglich exemplarisch und nicht abschließend.

Eine zu der vorgenannten Ausführungsform alternative vorteilhafte Weiterbildung des erfindungsgemäßen Systems sieht vor, dass das Aufstellgerät als ein Adapter für ein Kochgeschirr ausgebildet ist. Hierdurch ergibt sich eine klare funktionale Trennung zwischen der Funktion der automatischen Zuordnung des Aufstellgeräts zu mindestens einer der Mehrzahl von Kochstellen des Kochfelds auf der einen Seite und der Funktion des Kochgeschirrs auf der anderen Seite. Entsprechend spezifisch für die jeweilige Funktion kann sowohl das mindestens eine Aufstellgerät wie auch das mindestens eine Kochgeschirr ausgebildet sein. Darüber hinaus ist durch die Verwendung mindestens eines von einem Kochgeschirr separaten Aufstellgeräts eine Mehrfachverwendung dieses Aufstellgeräts für voneinander verschiedene Kochgeschirre ermöglicht.

Ferner sieht eine vorteilhafte Weiterbildung der vorgenannten Ausführungsform des erfindungsgemäßen Systems vor, dass die Sendeeinheit und/oder der Sensor bei einer mittels der Heizspule in die Induktionsspule des auf der dieser Heizspule zugeordneten Kochstelle aufgestellten Aufstellgeräts induzierten Spannung mit einer Betriebsenergie versorgbar ist/sind.

Darüber hinaus sieht eine vorteilhafte Weiterbildung des erfindungsgemäßen Systems nach einer der beiden letztgenannten Ausführungsformen vor, dass das induktive Kochfeld eine Kochfeld-Ausgabeeinheit zur Ausgabe von Informationen an den Benutzer des Aufstellgeräts aufweist, wobei in Abhängigkeit von einem mittels des Sensors erkannten Aufstellereignisses oder einer mittels des Sensors erkannten Unterlage, auf der das Aufstellgerät aufgestellt worden ist, mittels der Kochfeld-Ausgabeeinheit eine Information an den Benutzer ausgebbar ist. Hierdurch ist, analog zu der oben genannten Aufstellgerät-Ausgabeeinheit gemäß einer der vorgenannten Weiterbildungen, eine Rückmeldung, beispielsweise über das Vorliegen eines Aufstellereignisses oder die Beschaffenheit der Unterlage, an den Benutzer des Aufstellgeräts ermöglicht. Beispielsweise ist es denkbar, dass bei einem noch Restwärme aufweisenden Aufstellgerät als Information ein Warnsignal ausgegeben wird, wenn mittels des Sensors erkannt worden ist, dass es sich bei der Unterlage, auf der das Aufstellgerät aufgestellt worden ist, nicht um eine Kochstelle des induktiven Kochfelds, sondern um eine Unterlage aus Holz oder Stoff handelt.

Ein Ausführungsbeispiel der Erfindung ist in den Zeichnungen rein schematisch dargestellt und wird nachfolgend näher beschrieben. Es zeigt
- Figur 1: ein Ausführungsbeispiel eines erfindungsgemäßen Systems zur Durchführung eines erfindungsgemäßen Verfahrens,
- Figur 2: ein erstes Ausführungsbeispiel für ein erfindungsgemäßes Verfahren,
- Figur 3: ein zweites Ausführungsbeispiel für ein erfindungsgemäßes Verfahren,
- Figur 4 und 5: ein drittes Ausführungsbeispiel für ein erfindungsgemäßes Verfahren,
- Figur 6: ein Schaubild zu unterschiedlichen Modi eines induktiven Kochfelds des erfindungsgemäßen Systems aus Fig. 1 und
- Figur 7: ein Ausführungsbeispiel eines Aufstellgeräts des erfindungsgemäßen Systems aus Fig. 1.

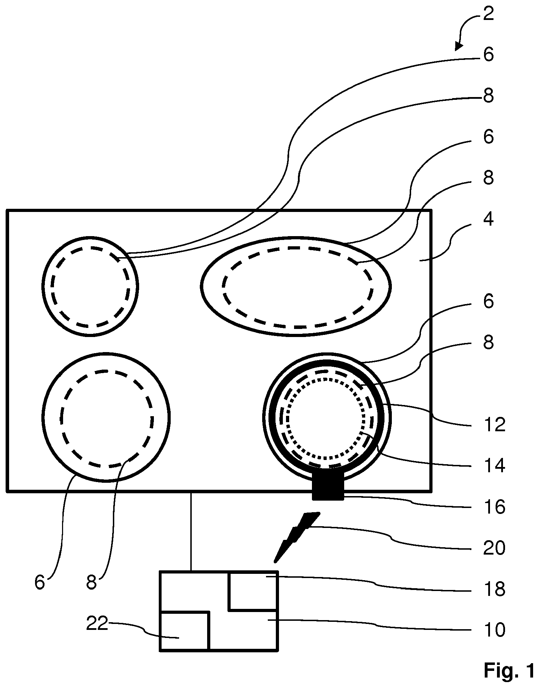

In Fig. 1 ist ein Ausführungsbeispiel eines erfindungsgemäßen Systems 2 zur Durchführung eines erfindungsgemäßen Verfahrens exemplarisch und grob schematisch dargestellt. Das System 2 weist ein induktiv beheiztes Kochfeld 4 mit insgesamt vier Kochstellen 6 auf. Jeder der Kochstellen 6 ist eine Heizspule 8 zur induktiven Beheizung eines auf der jeweiligen Kochstelle 6 abgestellten Kochgeschirrs auf dem Fachmann bekannte Weise zugeordnet. Zur Ansteuerung der einzelnen Heizspulen 8 weist das Kochfeld 4 eine Kochfeldsteuerung 10 auf. Die Kochfeldsteuerung 10 steuert die einzelnen Heizspulen 8 jeweils mit einem individuellen Zuordnungssignal an. Die jeweiligen Zuordnungssignale sind als Leistungsprofile ausgebildet. Die Leistungsprofile sind nicht zwingend für eine Beheizung der Kochstellen und damit von auf den Kochstellen aufgestellten Aufstellgeräten ausgebildet, sondern können auch lediglich für die Funktion der automatischen Zuordnung ausgebildet sein.

Das induktive Kochfeld 4 umfasst somit mindestens eine Kochstelle 6, mindestens eine der Kochstelle 6 zugeordnete Heizspule 8 und eine Kochfeldsteuerung 10 zur Ansteuerung der Heizspule 8 in einem Betriebsmodus E des induktiven Kochfelds 4 zur Beheizung eines auf der Kochstelle 6 aufgestellten Aufstellgeräts 12 mit einer Sendeeinheit 16. Die Kochfeldsteuerung 10 ist derart ausgebildet und eingerichtet, dass das induktive Kochfeld 4 zusätzlich in einem Standby-Modus S betreibbar ist, wobei eine Ansteuerung der jeweiligen Heizspule 8 in dem Standby-Modus S nicht ermöglicht ist. Ferner ist die Kochfeldsteuerung 10 derart ausgebildet und eingerichtet, dass das induktive Kochfeld 4 in einem Bereitschaftsmodus B betreibbar ist, wobei das induktive Kochfeld 4 mittels eines von einer Empfangseinheit 18 der Kochfeldsteuerung 10 empfangenen Wecksignals von dem Standby-Modus S in den Bereitschaftsmodus B überführbar ist. Die jeweilige Heizspule 8 ist in dem Bereitschaftsmodus B mittels der Kochfeldsteuerung 10 derart ansteuerbar, dass zum einen eine für einen Zubereitungsvorgang wirksame Beheizung des Aufstellgeräts 12 verhindert ist und zum anderen eine Signalübertragung zwischen der Sendeeinheit 16 und der Empfangseinheit 18 mittels der Heizspule 8 ermöglicht ist.

Darüber hinaus ist es bei dem vorliegenden Ausführungsbeispiel vorgesehen, dass die Heizspule 8 in dem Bereitschaftsmodus B mittels der Kochfeldsteuerung 10 derart ansteuerbar ist, dass eine Übertragung einer Betriebsenergie von dem induktiven Kochfeld 4 zu dem Aufstellgerät 12, das auf der dieser Heizspule 8 zugeordneten Kochstelle 6 aufgestellt ist, mittels der Heizspule 8 ermöglicht ist.

Das induktive Kochfeld 4 ist mittels der Kochfeldsteuerung 10 und in Abhängigkeit von einem in dem Bereitschaftsmodus B mittels der Empfangseinheit 18 empfangenen Antwortsignal automatisch von dem Bereitschaftsmodus B in den Betriebsmodus E überführbar.

Die Kochfeldsteuerung 10 steuert die einzelnen Heizspulen 8 in dem Bereitschaftsmodus B des induktiven Kochfelds 4 jeweils mit einem individuellen Zuordnungssignal an. Wie oben bereits erläutert, sind die jeweiligen Zuordnungssignale als Leistungsprofile ausgebildet.

Die als Bluetooth-Sender ausgebildete Sendeeinheit 16 wird, wie oben bereits ausgeführt, mittels einer in die Induktionsspule 14 induzierten Spannung mit einer für das Senden erforderlichen Betriebsenergie versorgt. Hierfür ist die Sendeeinheit 16 mit der Induktionsspule 14 energieübertragend verbunden. Das von der Sendeeinheit 16 gesendete Antwortsignal kann von der Empfangseinheit 18 der Kochfeldsteuerung 10 empfangen werden. Das Antwortsignal ist in Fig. 1 mittels eines Blitzsymbols 20 symbolisiert. Das mittels der Empfangseinheit 18 empfangene Antwortsignal 20 ist mittels einer Auswerteeinheit 22 der Kochfeldsteuerung 10 mit den einzelnen Heizspulen 8 zugeordneten Leistungsprofilen vergleichbar.

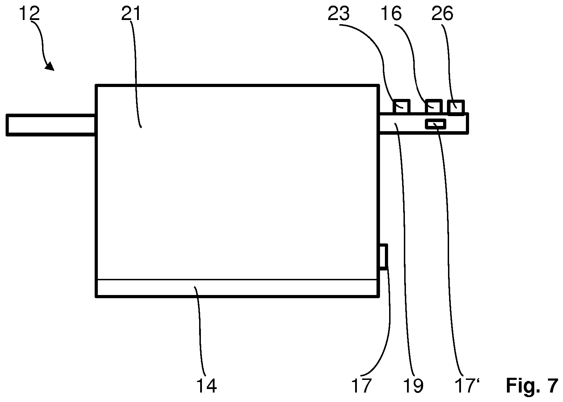

Ferner umfasst das Aufstellgerät 12 einen Sensor 17 zur Erkennung eines Aufstellereignisses und zur Erkennung der Beschaffenheit einer Unterlage, auf der das Aufstellgerät 12 aufgestellt worden ist. Siehe hierzu die Fig. 7. In einer einfacheren Ausführungsform ist es möglich, dass der Sensor lediglich zur Erkennung eines Aufstellereignisses ausgebildet ist.

Der Sensor 17 ist als ein Beschleunigungssensor ausgebildet, wobei mit dem Beschleunigungssensor auch Schwingungen detektierbar sind. Der Sensor 17 ist in einer ersten Variante an einem Griff 19 des Aufstellgeräts 12 und in einer zweiten Variante an einem Gefäß 21 des Aufstellgeräts 12 zur Aufnahme eines für die Zubereitung mittels des Aufstellgeräts 12 vorgesehenen Mediums angeordnet. Die beiden Varianten für die Positionierung des Sensors 17 an dem Aufstellgerät 12 sind in der Fig. 7 mit den Bezugszeichen 17 und 17' bezeichnet. Nachfolgend wird der Einfachheit halber lediglich das Bezugszeichen 17 verwendet; jedoch sind stets beide vorgenannten Varianten der Positionierung des Sensors 17, 17' gemeint. Zusätzlich weist das Aufstellgerät 12 ein als Bedientaste ausgebildetes Bedienelement 23 zur manuellen Bedienung durch einen Benutzer auf. Das Bedienelement 23 ist bei dem vorliegenden Ausführungsbeispiel dazu vorgesehen, um das Aufstellgerät 12 auszuschalten. Ferner überschneidet sich der Funktionsumfang des Sensors 17 mit dem Funktionsumfang des Bedienelements 23 zumindest teilweise. Dies wird nachfolgend noch näher erläutert. Das Aufstellgerät 12 ist derart ausgebildet und eingerichtet, dass die Sendeeinheit 16 und der Sensor 17 mittels der Induktionsspule 14 mit einer Betriebsenergie versorgbar sind.

Auch weist das Aufstellgerät 12 eine Aufstellgerät-Ausgabeeinheit 26 zur Ausgabe von Informationen an den Benutzer des Aufstellgeräts 12 auf, wobei in Abhängigkeit von einem mittels des Sensors 17 erkannten Aufstellereignisses und/oder einer mittels des Sensors 17 erkannten Unterlage, auf der das Aufstellgerät 12 aufgestellt worden ist, mittels der Aufstellgerät-Ausgabeeinheit 26 eine Information an den Benutzer ausgebbar ist.

Alternativ oder zusätzlich dazu kann das induktive Kochfeld in einer anderen Ausführungsform des erfindungsgemäßen Systems eine Kochfeld-Ausgabeeinheit zur Ausgabe von Informationen an den Benutzer des Aufstellgeräts aufweisen, wobei in Abhängigkeit von einem mittels des Sensors erkannten Aufstellereignisses oder einer mittels des Sensors erkannten Unterlage, auf der das Aufstellgerät aufgestellt worden ist, mittels der Kochfeld-Ausgabeeinheit eine Information an den Benutzer ausgebbar ist.

Im Nachfolgenden wird das erfindungsgemäße Verfahren gemäß dem vorliegenden Ausführungsbeispiel des Systems 2 anhand der Fig. 1 bis 7 näher erläutert.

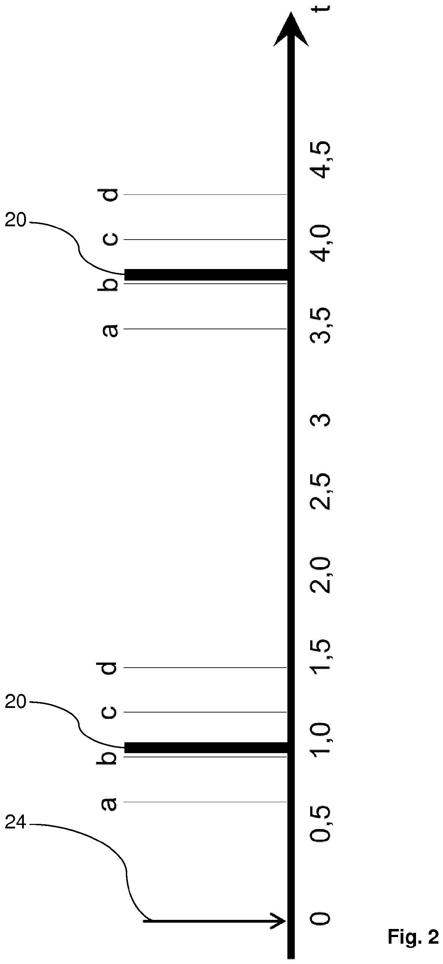

In den Fig. 2 bis 5 sind drei Ausführungsbeispiele für das erfindungsgemäße Verfahren jeweils anhand eines Zeit-Signal-Diagramms exemplarisch dargestellt.

Das erfindungsgemäße Verfahren zur automatischen Zuordnung des als Kochtopf ausgebildeten Aufstellgeräts 12 zu mindestens einer der Kochstellen 6 des induktiven Kochfelds 4 funktioniert grundsätzlich wie folgt:
Ein Benutzer des Systems 2 schaltet das Kochfeld 4 ein und stellt das als Kochtopf ausgebildete Aufstellgerät 12 auf die in der Bildebene von Fig. 1 rechts vorne angeordnete Kochstelle 6 des Kochfelds 4. Nach dem Einschalten des Kochfelds 4 zu einem Zeitpunkt t = 0 s, das in der Fig. 2 durch einen Pfeil 24 symbolisiert ist, steuert die Kochfeldsteuerung 10 bei dem in der Fig. 2 dargestellten ersten Ausführungsbeispiel des erfindungsgemäßen Verfahrens die Heizspulen 8 der einzelnen Kochstellen 6 nacheinander, also sukzessive, mit deren jeweiligem Leistungsprofil an. Dies ist in der Fig. 2 mittels der Linien a, b, c und d symbolisiert, wobei die Linie a die Ansteuerung der zu der in der Bildebene von Fig. 1 links unten dargestellten Kochstelle 6 korrespondierenden Heizspule 8, die Linie b die Ansteuerung der zu der in der Bildebene von Fig. 1 rechts unten dargestellten Kochstelle 6 korrespondierenden Heizspule 8, die Linie c die Ansteuerung der zu der in der Bildebene von Fig. 1 recht oben dargestellten Kochstelle 6 korrespondierenden Heizspule 8 und die Linie d die Ansteuerung der zu der in der Bildebene von Fig. 1 links oben dargestellten Kochstelle 6 korrespondierenden Heizspule 8 symbolisiert.

Da auf der in der Bildebene von Fig. 1 rechts unten dargestellten Kochstelle 6 das Aufstellgerät 12 aufgestellt ist, wird bei der Ansteuerung der dieser Kochstelle 6 zugeordneten Heizspule 8 eine Spannung von dieser Heizspule 8 in der Induktionsspule 14 des Aufstellgeräts 12 induziert. Siehe hierzu die Linie b in Fig. 2. Aufgrund der in der Induktionsspule 14 induzierten Spannung wird die Sendeeinheit 16 des Aufstellgeräts 12 mit der für ein Senden erforderlichen Betriebsenergie versorgt. Darüber hinaus wird mittels der induzierten Spannung gleichzeitig ein Senden der Sendeeinheit 16 ausgelöst, nämlich das Senden des Antwortsignals 20. Siehe Fig. 2. Das Antwortsignal 20 umfasst zum einen eine das Aufstellgerät 12 als genau dieses individuelle Aufstellgerät 12 kennzeichnende Identifizierung. Diese Identifizierung des Aufstellgeräts 12 kann beispielsweise für einen Garvorgang auf dem Kochfeld 4 wichtige Kochtopfeigenschaften aufweisen. Zum anderen umfasst das Antwortsignal 20 mindestens ein zu dem mittels der Heizspule 8 der in der Bildebene von Fig. 1 rechts unten dargestellten Kochstelle 6 in die Induktionsspule 14 des Aufstellgeräts 12 induzierten Leistungsprofil korrelierende Größe. Beispielsweise kann es sich bei dieser Größe um das Leistungsprofil als solches handeln. Denkbar ist jedoch auch, dass diese Größe mindestens eine das Leistungsprofil charakterisierende elektrische und/oder magnetische Größe ist.

Das Antwortsignal 20 wird an die Empfängereinheit 18 der Kochfeldsteuerung 10 gesendet. Das von der Empfängereinheit 18 empfangene Antwortsignal 20 wird dann auf dem Fachmann bekannte Weise an die mit der Empfängereinheit 18 signalübertragend verbundene Auswerteeinheit 22 der Kochfeldsteuerung 10 zur Auswertung übertragen. In der Auswerteeinheit 22 wird das Antwortsignal 20 unter anderem mit dem Leistungsprofil der der in der Bildebene von Fig. 1 rechts unten dargestellten Kochstelle 6, auf der das Aufstellgerät 12 aufgestellt ist, zugeordneten Heizspule 8 verglichen, mit dem diese Heizspule 8 mittels der Kochfeldsteuerung 10 angesteuert worden ist. Da die zu diesem Leistungsprofil korrelierende mindestens eine Größe, die mit dem Antwortsignal 20 von dem Aufstellgerät 12 an die Kochfeldsteuerung 10 übertragen worden ist, mit diesem Leistungsprofil übereinstimmt, wird das Aufstellgerät 12 der in der Bildebene von Fig. 1 rechts unten dargestellten Kochstelle 6 mittels der Auswerteeinheit 22 der Kochfeldsteuerung 10 automatisch zugeordnet. Die Kochfeldsteuerung 10 weiß nun, dass auf dieser Kochstelle 6 genau dieses Aufstellgerät 12 aufgestellt ist und kann auf dieser Basis den Garvorgang für dieses individuelle Aufstellgerät 12 mittels der Ansteuerung der dieser Kochstelle 6 zugeordneten Heizspule 8 steuern oder regeln. Das Antwortsignal 20 wird in der Auswerteeinheit 22 auch mit den Leistungsprofilen der übrigen den in der Fig. 1 dargestellten weiteren Kochstellen 6 zugeordneten Heizspulen 8 verglichen, mit denen diese Heizspulen 8 mittels der Kochfeldsteuerung 10 angesteuert worden sind. Da das Aufstellgerät 12 jedoch nicht auf diese Kochstellen 6 und damit nicht über den diesen Kochstellen 6 zugeordneten Heizspulen 8 aufgestellt ist, führt die jeweilige Ansteuerung dieser Heizspulen 8 nicht zu einem zu einem dieser Leistungsprofile korrespondierenden Antwortsignal.

Wie aus Fig. 2 weiter ersichtlich ist, erfolgen auf die in der Zeitachse links dargestellten Ansteuerungen der übrigen Heizspulen 8 des Kochfelds 4 keine Antwortsignale von etwaigen anderen Aufstellgeräten. Bei dem vorliegenden Ausführungsbeispiel des erfindungsgemäßen Verfahrens werden die einzelnen Heizspulen 8 des Kochfelds 4 während des Betriebs des Kochfelds 4 in vorher festgelegten Zeitabständen kontinuierlich sukzessive angesteuert. Bei jedem Durchlauf der Ansteuerung der einzelnen Heizspulen 8 mittels der Kochfeldsteuerung 10 werden immer alle vier Heizspulen 8 des Kochfelds 4 sukzessive angesteuert. Nach dem in der Fig. 2 links dargestellten Durchlauf beginnt ab t= 3,5 s ein erneuter Durchlauf mit der sukzessiven Ansteuerung der Heizspulen 8 des Kochfelds 4. Bei dem vorliegenden Ausführungsbeispiel erfolgt das Auslöseereignis für die Ansteuerung der einzelnen Heizspulen 8 des Kochfeldes 4 mit deren jeweiligem Leistungsprofil bei eingeschaltetem Kochfeld 4 also in Abhängigkeit mindestens eines vorher festgelegten Zeitintervalls kontinuierlich.

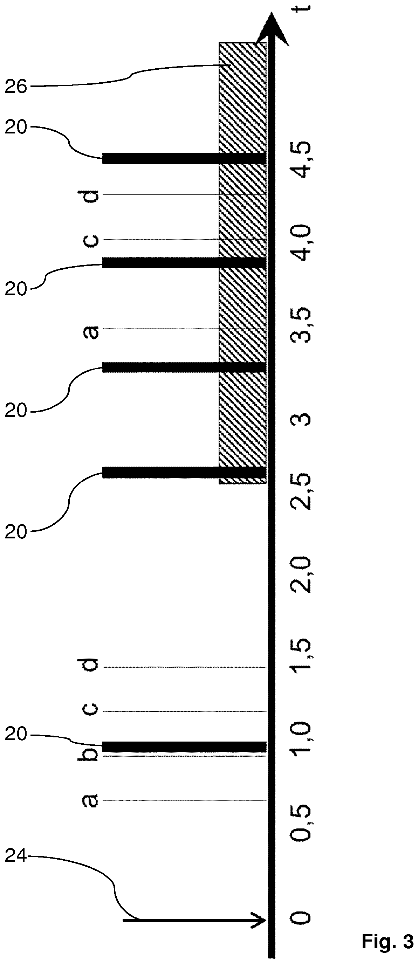

In Fig. 3 ist ein zweites Ausführungsbeispiel des erfindungsgemäßen Verfahrens dargestellt. Im Unterschied zu dem ersten Ausführungsbeispiel gemäß der Fig. 2 werden bei dem vorliegenden Ausführungsbeispiel nicht bei jedem Durchlauf der Ansteuerung der einzelnen Heizspulen 8 mittels der Kochfeldsteuerung 10 alle Heizspulen 8 sukzessive angesteuert. Analog zu dem ersten Ausführungsbeispiel ist hier ebenfalls das Aufstellgerät 12 auf der in der Bildebene von Fig. 1 rechts unten dargestellten Kochstelle 6 aufgestellt. Wie aus Fig. 3 ersichtlich ist, wird die dieser Kochstelle 6 zugeordnete Heizspule 8 mit einer konstanten Leistung zur Beheizung des Aufstellgeräts 12 bestromt, also von der Kochfeldsteuerung 10 angesteuert. Siehe hierzu das Rechteck 26, das die dem Aufstellgerät 12 mittels dieser Heizspule 8 konstant zugeführte Leistung symbolisiert. Aufgrund dieser dem Aufstellgerät 12 konstant zugeführten Leistung versorgt die Induktionsspule 14 des Aufstellgeräts 12 die als Bluetooth-Sender ausgebildete Sendeeinheit 16 kontinuierlich mit der für ein Senden der Sendeeinheit 16 erforderlichen Betriebsenergie. Entsprechend sendet die Sendeeinheit 16 des Aufstellgeräts 12 in vorher festgelegten zeitlichen Abständen kontinuierlich ein Antwortsignal 20 an die Kochfeldsteuerung 10. Siehe Fig. 3. Bei dem Antwortsignal 20 kann es sich um das ursprüngliche Antwortsignal 20 handeln. Dies ist jedoch nicht zwingend erforderlich. Beispielsweise kann das in diesem Zeitraum gesendete Antwortsignal 20 charakteristisch für die konstante Leistung 26 sein, die während des Garvorgangs zur Beheizung an das Aufstellgerät 12 übertragen wird.

Aufgrund der unveränderten Belegung der in der Bildebene der Fig. 1 rechts unten dargestellten Kochstelle 6 mit dem Aufstellgerät 12 werden in dem Zeitraum, in dem das Aufstellgerät 12 kontinuierlich ein Antwortsignal 20 an die Kochfeldsteuerung 10 sendet, lediglich die übrigen Heizspulen 8 des Kochfelds 4 auf die oben erläuterte Weise, nämlich in vorher festgelegten zeitlichen Abständen, sukzessive mit deren jeweiligem Leistungsprofil angesteuert. Siehe hierzu den in der Bildebene von Fig. 3 rechts dargestellten Durchlauf mit den Linien a, c und d.

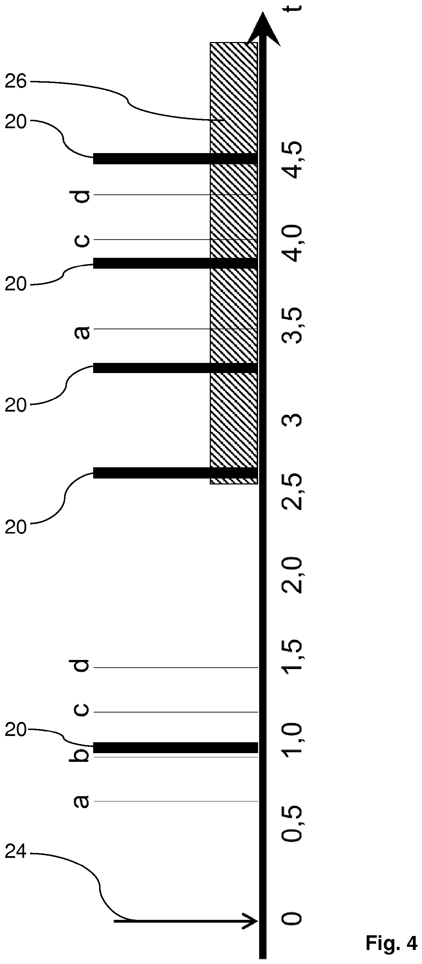

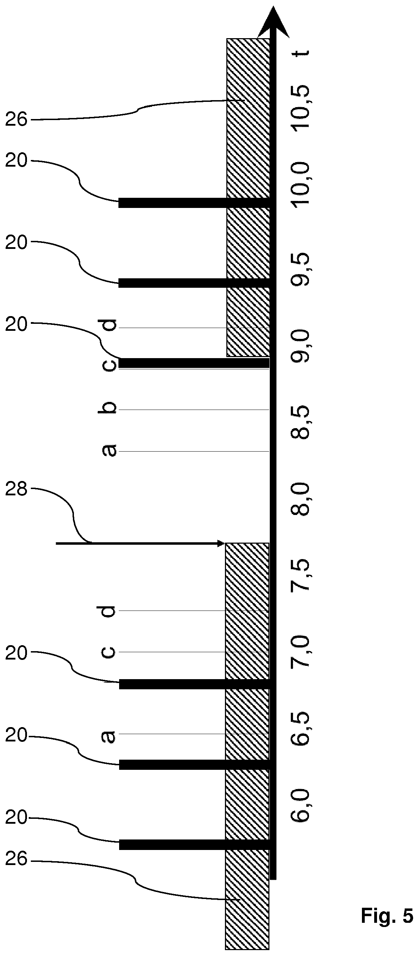

Fig. 4 und 5 zeigen gemeinschaftlich ein viertes Ausführungsbeispiel des erfindungsgemäßen Verfahrens. Wie aus der Fig. 4 ersichtlich ist, ist der Ablauf und der Verlauf bei dem vierten Ausführungsbeispiel in einer Anfangsphase zunächst identisch zu dem Ablauf und dem Verlauf des gemäß der Fig. 3 dargestellten zweiten Ausführungsbeispiels. Nach einer gewissen Zeitspanne wird das Aufstellgerät 12 von dem Benutzer von der in der Bildebene von Fig. 1 rechts unten dargestellten Kochstelle 6 auf die in der Bildebene von Fig. 1 recht oben dargestellten Kochstelle 6 verschoben. Dies ist in der Fig. 5 durch einen Pfeil 28 symbolisiert. Diese Verschiebung des Aufstellgeräts 12 wird mittels der Kochfeldsteuerung 10 detektiert. Beispielsweise aufgrund von einer Reaktion des von der Heizspule 8 der in der Bildebene von Fig. 1 rechts unten dargestellten Kochstelle 6 und der Induktionsspule 14 des Aufstellgeräts 12 gebildeten Schwingkreises. Aufgrund dieser detektierten Änderung in der Belegung der Kochstellen 6 des Kochfelds 4 mit dem Aufstellgerät 12 werden wieder alle Heizspulen 8 des Kochfelds 4 zur automatischen Zuordnung mittels der Kochfeldsteuerung 10 angesteuert, wie dies am Anfang der Fall war. Siehe hierzu den in der Fig. 5 rechts dargestellten Durchlauf der Ansteuerung der Heizspulen 8 mit den Linien a, b, c und d in Verbindung mit dem in der Fig. 4 links dargestellten Durchlauf der Ansteuerung der Heizspulen 8 mit den Linien a, b, c und d. Die obige Verschiebung des Aufstellgeräts 12, die mittels der Kochfeldsteuerung 10 detektiert worden ist, ist ein Auslöseereignis, in Abhängigkeit dessen die Heizspulen 8 des Kochfelds 4 mittels der Kochfeldsteuerung 10 zur automatischen Zuordnung angesteuert werden. Analog zu den obigen Ausführungen gemäß des ersten und des zweiten Ausführungsbeispiels erkennt die Kochfeldsteuerung 10 bei dem in der Fig. 5 rechts dargestellten Durchlauf der Ansteuerung der Heizspulen 8 des Kochfelds 4, dass das Aufstellgerät 12 nach dessen Verschiebung auf der in der Bildebene von Fig. 1 rechts oben dargestellten Kochstelle 6 des Kochfelds 4 aufgestellt ist. Entsprechend wird nun diese Kochstelle 6 des Kochfelds 4 induktiv beheizt, um das darauf aufgestellte Aufstellgerät 12 zu erwärmen. Bei der Beheizung des Aufstellgeräts 12 mittels der in der Bildebene von Fig. 1 rechts oben dargestellten Kochstelle 6 kann es vorgesehen sein, dass für diese fortgeführte Beheizung des Aufstellgeräts 12, dessen Beheizung ja bereits auf dem in der Bildebene von Fig. 1 rechts unten dargestellten Kochstelle 6 begonnen worden ist, diese bis zu dem Zeitpunkt der Verschiebung 28 des Aufstellgeräts 12 erfolgte Beheizung des Aufstellgeräts 12 bei der nun fortgeführten Beheizung dieses Aufstellgeräts 12 berücksichtigt wird. Beispielsweise, in dem die Beheizungsdauer für diese fortgeführte Beheizung in Abhängigkeit der bereits erfolgten Beheizung des Aufstellgeräts 12 mittels der Kochfeldsteuerung 10 des Kochfelds 4 automatisch eingestellt wird.

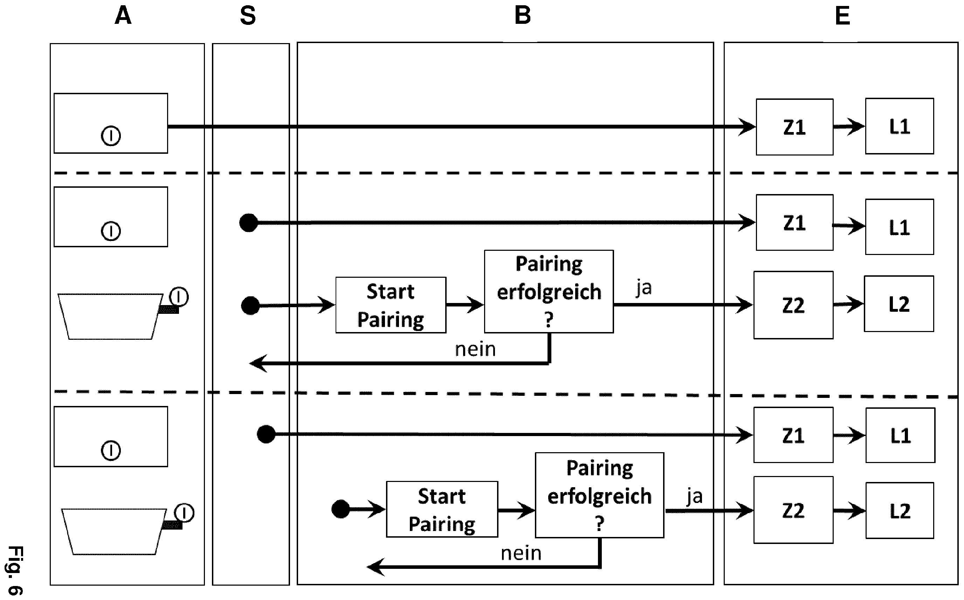

Sofern sich das induktive Kochfeld 4 in dessen Ausschaltmodus A befindet, beispielsweise in dem das induktive Kochfeld 4 mittels eines nicht dargestellten Hauptschalters vollständig ausgeschaltet worden ist, kann der nicht dargestellte Benutzer das induktive Kochfeld 4 des Systems 2, beispielsweise mittels eines aus dem Stand der Technik bekannten Bedieneingriffs an dem induktiven Kochfeld 4, von dem Ausschaltmodus A direkt in den Betriebsmodus E überführen. Siehe hierzu die Fig. 6, oberste Zeile. Der Benutzer kann dann auf dem Fachmann bekannte Weise einen Zubereitungsvorgang, beispielsweise einen Kochvorgang, mittels des Systems 2 durchführen. Hierfür kann der Benutzer an dem induktiven Kochfeld 4, beispielsweise mittels eines auf dem induktiven Kochfeld 4 eingeblendeten Zahlenstrangs Z1 eine Leistungseinstellung L1 für die Heizspule 8 vornehmen, die der Kochstelle 6 zugeordnet ist, auf der dieser das als Kochtopf ausgebildete Aufstellgerät 12 aufgestellt hat.

Befindet sich das induktive Kochfeld 4 in dessen Standby-Modus S, also in dem das induktive Kochfeld 4 nicht vollständig ausgeschaltet ist, ist eine Ansteuerung der Heizspulen 8 technisch nicht ermöglicht. Dazu müsste der Benutzer das induktive Kochfeld 4 beispielsweise erst auf die oben erläuterte Weise in den Betriebsmodus E überführen. Siehe Fig. 6, mittlere Zeile, oben.

Jedoch ist das induktive Kochfeld 4 des Systems 2 dazu ausgebildet und eingerichtet, um von dem Standby-Modus S automatisch in den Bereitschaftsmodus B überführt zu werden. Hierfür bedarf es des oben genannten Wecksignals, das mittels der Empfangseinheit 18 der Kochfeldsteuerung 10 empfangen wird. Dieses Wecksignal kann auf voneinander verschiedene Weise erzeugt werden. Bei dem vorliegenden Ausführungsbeispiel ist es vorgesehen, dass das Wecksignal mittels einer Betätigung des an dem Aufstellgerät 12 angeordneten und mit der Sendeeinheit 16 in Signalübertragungsverbindung stehenden Bedienelements 23 oder mittels des an dem Aufstellgerät 12 angeordneten und mit der Sendeeinheit 16 in Signalübertragungsverbindung stehenden Sensors 17 oder mittels einer Betätigung eines an dem induktiven Kochfeld 4 angeordneten und mit der Empfangseinheit 18 der Kochfeldsteuerung 10 in Signalübertragungsverbindung stehenden Bedienelements oder mittels einer Betätigung eines an einem Drittgerät angeordneten und mit der Empfangseinheit 18 der Kochfeldsteuerung 10 in Signalübertragungsverbindung stehenden Bedienelements erzeugt wird. Siehe Fig. 7. Entsprechend ist das induktive Kochfeld 4 auf sehr unterschiedliche Weise von dem Standby-Modus S in den Bereitschaftsmodus B überführbar, was den Bedienkomfort des Systems 2 steigert. Das Bedienelement des induktiven Kochfelds 4 und das als Smartphone ausgebildete Drittgerät sind nicht dargestellt.

Beispielsweise wird das Wecksignal mittels einer Betätigung des an dem Aufstellgerät 12 angeordneten und mit der Sendeeinheit 16 in Signalübertragungsverbindung stehenden Bedienelements 23 des Aufstellgeräts 12 generiert. Hierfür drückt der Benutzer beispielsweise das als Taste ausgebildete Bedienelement 23 des Aufstellgeräts 12 und stellt das Aufstellgerät 12 auf die oben genannte Kochstelle 6 des induktiven Kochfelds 4 auf. Dieser Tastendruck wird mittels der Sendeeinheit 16 des Aufstellgeräts 12 ausgewertet und in das Wecksignal umgewandelt. Das Wecksignal wird dann mittels der Sendeinheit 16, der Heizspule 8 und der Empfangseinheit 18 in die Kochfeldsteuerung 10 übertragen. Die Kochfeldsteuerung 10 überführt das induktive Kochfeld 4 daraufhin von dem Standby-Modus S in den Bereitschaftsmodus B. Die Sendeeinheit 16 wird mittels der durch die Heizspule 8 in die Induktionsspule 14 des auf der dieser Heizspule 8 zugeordneten Kochstelle 6 aufgestellten Aufstellgeräts 12 induzierten Spannung mit Betriebsenergie versorgt. Siehe Fig. 6, mittlere Zeile, unten.

Zusätzlich dazu ist es vorgesehen, dass das Wecksignal mittels des an dem Aufstellgerät 12 angeordneten und mit der Sendeeinheit 16 in Signalübertragungsverbindung stehenden Sensors 17 automatisch erzeugbar ist. Beispielsweise wird mittels des Sensors 17 automatisch erkannt, dass das Aufstellgerät 12 von dem Benutzer auf die vorgenannte Kochstelle 6 des induktiven Kochfelds 4 aufgestellt worden ist. Der Sensor 17 hat also zum einen das Vorliegen eines Aufstellereignisses und zum anderen die Unterlage, auf der das Aufstellgerät 12 aufgestellt worden ist, detektiert. Somit ist eine manuelle Betätigung des Bedienelements 23 nicht erforderlich. Jedoch ist es beispielsweise aus Gründen der Redundanz vorteilhaft, dass das Wecksignal auf die oben erläuterte Weise auch mittels des Bedienelements 23 generiert werden kann. Die Auswertung von Ausgangssignalen des Sensors 17 erfolgt bei dem vorliegenden Ausführungsbeispiel direkt in dem Aufstellgerät 12. Die Sendeeinheit 16 und der Sensor 17 werden mittels der durch die Heizspule 8 in die Induktionsspule 14 des auf der dieser Heizspule 8 zugeordneten Kochstelle 6 aufgestellten Aufstellgeräts 12 induzierten Spannung mit Betriebsenergie versorgt.

Die elektrische Leistung, mit der die Kochfeldsteuerung 10 die Heizspule 8 in dem Bereitschaftsmodus B ansteuert weist einen Mittelwert von kleiner oder gleich 30 W, bevorzugt kleiner oder gleich 15 W, auf. Ferner weist die elektrische Leistung, mit der die Kochfeldsteuerung 10 die Heizspule 8 in dem Bereitschaftsmodus B ansteuert ein Pausen-Leistungs-Verhältnis von größer oder gleich 1000:1 auf, nämlich eine Bestromung in einem Zeitintervall von 160 µs im Vergleich zu einem Pausenintervall von 2 s. Hierdurch ist zum einen eine für einen Zubereitungsvorgang wirksame Beheizung des Aufstellgeräts 12 verhindert und zum anderen eine Signalübertragung zwischen der Sendeeinheit 16 und der Empfangseinheit 18 mittels der Heizspule 8 ermöglicht. Ferner ist eine Übertragung einer Betriebsenergie von dem induktiven Kochfeld 4 zu dem Aufstellgerät 12, das auf der dieser Heizspule 8 zugeordneten Kochstelle 6 aufgestellt ist, mittels der Heizspule 8 ermöglicht.

Mit der Überführung des induktiven Kochfelds 4 von dessen Standby-Modus S in dessen Bereitschaftsmodus B wird mittels der Kochfeldsteuerung 10 die automatische Zuordnung des Aufstellgeräts 12 zu der oben genannten Kochstelle 6 des induktiven Kochfelds 4 gestartet, was oben bereits erläutert worden ist. Es wird also in Abhängigkeit von einem mittels des Sensors 17 erkannten Aufstellereignisses und einer mittels des Sensors 17 erkannten Unterlage, auf der das Aufstellgerät 12 aufgestellt worden ist, eine Verfahrensroutine zur automatischen Zuordnung des Aufstellgeräts 12 zu mindestens einer der Kochstellen 6 des induktiven Kochfelds 4 gestartet.

Gemäß den vorgenannten Ausführungen war die Zuordnung des Aufstellgeräts 12 zu der in der Bildebene von Fig. 1 rechts unten dargestellten Kochstelle 6 und damit zu der zu dieser Kochstelle 6 korrespondierenden Heizspule 8 erfolgreich, so dass die Kochfeldsteuerung 10 das induktive Kochfeld 4 des Systems 2 automatisch von dem Bereitschaftsmodus B in den Betriebsmodus E überführt. Der Benutzer kann an dem induktiven Kochfeld 4, beispielsweise mittels des oben genannten Zahlenstrangs Z1 eine Leistungseinstellung L1 für diese Heizspule 8 vornehmen. Bei dem vorliegenden Ausführungsbeispiel ist es darüber hinaus möglich, dass der Benutzer mittels von Bedienelementen Z2 des Aufstellgeräts 12 eine Leistungseinstellung L2 für die vorgenannte Heizspule 8 vornehmen kann. Die Bedienelemente Z2 des Aufstellgeräts 12 sind nicht dargestellt. Der Benutzer kann also die der vorgenannten Heizspule 8 zugeführte Leistung zum einen direkt an dem induktiven Kochfeld 4 und zum anderen an dem Aufstellgerät 12 einstellen.

Sofern eine automatische Zuordnung des Aufstellgeräts 12 zu einer der Kochstellen 6 des induktiven Kochfelds 4 des Systems 2 nicht erfolgt, beispielsweise, weil das Aufstellgerät 12 auf keiner der Kochstellen 6 des induktiven Kochfelds 4 aufgestellt worden ist, überführt die Kochfeldsteuerung 10 das induktive Kochfeld 4, beispielsweise nach Ablauf einer vorher festgelegten und in der Kochfeldsteuerung 10 abgespeicherten Zeitspanne, automatisch von dem Bereitschaftsmodus B zurück in den Standby-Modus S. Siehe die Fig. 6, mittlere Zeile, unten.

Eine automatische Zuordnung des Aufstellgeräts 12 zu einer der Kochstellen 6 könnte beispielsweise deshalb nicht möglich sein, weil das Aufstellgerät 12 beispielsweise auf einem nicht dargestelltenTopfuntersetzer aus Holz auf einem Tisch aufgestellt worden ist. In diesem Fall kann es vorgesehen sein, dass in Abhängigkeit von dem mittels des Sensors 17 erkannten Aufstellereignis und der mittels des Sensors 17 erkannten Unterlage, auf der das Aufstellgerät 12 aufgestellt worden ist, mittels der Aufstellgerät-Ausgabeeinheit 26 eine Information an den Benutzer ausgegeben wird. Beispielsweise ist es denkbar, dass bei einem noch Restwärme aufweisenden Aufstellgerät 12 als Information ein Warnsignal ausgegeben wird, wenn mittels des Sensors 17 erkannt worden ist, dass es sich bei der Unterlage, auf der das Aufstellgerät 12 aufgestellt worden ist, nicht um eine der Kochstellen 6 des induktiven Kochfelds 4, sondern um eine Unterlage aus Holz oder Stoff, beispielsweise den oben genannten Topfuntersetzer, handelt. Eine Information an den Benutzer kann auch für den Fall erfolgen, wenn mittels des Sensors 17 das Aufstellen des Aufstellgeräts 12 auf das induktive Kochfeld 4 erkannt worden ist.

Analog zu der oben erläuterten Überführung des induktiven Kochfelds 4 von dessen Ausschaltmodus A in dessen Betriebsmodus E ist es bei dem vorliegenden Ausführungsbeispiel auch möglich, das induktive Kochfeld 4 von dem Standby-Modus S direkt in den Betriebsmodus E zu überführen. Siehe hierzu ebenfalls die Fig. 6, mittlere Zeile, oben.

Bei den vorliegenden Ausführungsbeispielen des erfindungsgemäßen Verfahrens werden die einzelnen Heizspulen 8 des Kochfelds 4 in dem Bereitschaftsmodus B und in dem Betriebsmodus E des induktiven Kochfelds 4 in vorher festgelegten Zeitabständen unabhängig von einem Wecksignal beispielsweise kontinuierlich sukzessive angesteuert. Siehe oben. Bei den vorliegenden Ausführungsbeispielen des erfindungsgemäßen Verfahrens erfolgt die Ansteuerung der einzelnen Heizspulen 8 des induktiven Kochfeldes 4 mit deren jeweiligem Leistungsprofil in dem Bereitschaftsmodus B und in dem Betriebsmodus E des induktiven Kochfelds 4 also in Abhängigkeit mindestens eines vorher festgelegten Zeitintervalls kontinuierlich. Siehe hierzu beispielsweise die Fig. 6, unterste Zeile.

Die automatische Überführung des induktiven Kochfelds 4 von dessen Bereitschaftsmodus B in dessen Betriebsmodus E erfolgt zum einen durch den oben bereits erläuterten Bedieneingriff und damit analog zu der Überführung von dem Ausschaltmodus A in den Betriebsmodus E. Zum anderen erfolgt die Überführung von dem Bereitschaftsmodus B in den Betriebsmodus E automatisch durch eine erfolgreiche Zuordnung von dem Aufstellgerät 12 auf der einen Seite zu einer der Kochstellen 6 des induktiven Kochfelds 4 auf der anderen Seite.

Die Erfindung ist nicht auf die vorliegenden Ausführungsbeispiele begrenzt. Beispielsweise kann die Erfindung auch bei anderen Kochgeschirren vorteilhaft eingesetzt werden. Auch ist es denkbar, dass das Aufstellgerät als ein Adapter für ein Kochgeschirr ausgebildet ist.

Anstelle der rein sukzessiven Ansteuerung der Heizspulen ist es auch möglich, dass die Heizspulen der Kochstellen des Kochfelds zur automatischen Zuordnung gleichzeitig angesteuert werden. Auch eine Kombination einer sukzessiven und einer gleichzeitigen Ansteuerung ist grundsätzlich möglich, nämlich, dass die Heizspulen der Kochstellen des Kochfelds zur automatischen Zuordnung in einer ersten Zuordnungsphase gleichzeitig und in einer zweiten Zuordnungsphase sukzessive angesteuert werden.

Im Falle einer gleichzeitigen Ansteuerung der Heizspulen ist es denkbar, dass sich bei der gleichzeitigen Ansteuerung der Heizspulen der Kochstellen die mittels der jeweiligen Ansteuerung erzeugten Leistungsprofile der Heizspulen der einzelnen Kochstellen voneinander unterscheiden. Dies ist bei einer in den Ausführungsbeispielen erläuterten sukzessiven Ansteuerung der Heizspulen, abweichend von den Ausführungsbeispielen, nicht zwingend erforderlich. Dies deshalb nicht, weil bei einer sukzessiven Ansteuerung ja immer nur eine Heizspule angesteuert wird.

Ferner ist es auch denkbar, dass die Sendeeinheit des Aufstellgeräts in Abhängigkeit einer in der Sendeeinheit abgespeicherten individuellen Verzögerungszeit die Sendung des Antwortsignals an die Empfangseinheit verzögert. Dies ist beispielsweise dann sinnvoll, wenn eine Mehrzahl von Aufstellgeräten auf einer einzigen Kochstelle aufgestellt sind.

Um den vorgenannten Fall, wonach eine Mehrzahl von Aufstellgeräten auf einer einzigen Kochstelle aufgestellt sind, zu handhaben, kann vorgesehen sein, dass das Antwortsignal in der Sendeeinheit zwischengespeichert wird. Entsprechend lassen sich die Antwortsignale der einzelnen Aufstellgeräte jeweils in einer geordneten Sendereihenfolge senden.

Hierfür und für andere Anwendungsfälle kann es sinnvoll sein, dass die mittels der mindestens einen Heizspule des Kochfelds in die Induktionsspule des auf dieser Kochstelle aufgestellten Aufstellgeräts eingekoppelte Betriebsenergie für die Sendeeinheit zumindest teilweise in einem Energiespeicher des Aufstellgeräts gespeichert wird.

Wie bereits erläutert kann es sich bei der mittels des Antwortsignals an die Kochfeldsteuerung übertragenen und zu dem Leistungsprofil korrelierenden Größe um das Leistungsprofil an sich handeln. Um die Übertragungsbandbreite zu reduzieren, ist es aber auch denkbar, dass anstelle des Leistungsprofils mindestens eine elektrische und/oder magnetische Größe übertragen wird, die das Leistungsprofil charakterisiert und unmittelbar zu dem Leistungsprofil korreliert. Auch denkbar wäre, dass lediglich eine zu dem Leistungsprofil korrespondierende und in dem Aufstellgerät abgespeicherte Kennung in dem Zuordnungssignal an die Kochfeldsteuerung übertragen wird.

Anstelle einer derartigen Kennung sind beispielsweise auch mindestens eine für das Leistungsprofil charakteristische Frequenz von Leistungsspitzen und Leistungssenken und/oder die Anzahl der Leistungsspitzen und/oder Leistungssenken im Leistungsprofil und/oder die Länge von für das Leistungsprofil charakteristischen Merkmalen, beispielsweise von Leistungsspitzen und/oder Leistungssenken, möglich. Das Leistungsprofil kann auch als eine digitale Übertragung behandelt werden, wobei ein daraus resultierendes Ergebnis als eine Binär- oder Hexadezimalzahl mittels des Antwortsignals an die Kochfeldsteuerung übertragen werden.

Die Zuordnungssignale können, wie in den obigen Ausführungsbeispielen erläutert, als Leistungsprofile ausgebildet sein. Dies ist jedoch nicht zwingend erforderlich. Siehe hierzu auch die obige Vorteilsbeschreibung. Entsprechend gelten die vorgenannten Ausführungen zu den als Leistungsprofilen ausgebildeten Zuordnungssignalen in analoger Weise auch für andersartige Zuordnungssignale.

Zusätzlich zu den Inhalten des Zuordnungssignals gemäß den oben erläuterten Ausführungsbeispielen ist es möglich, dass das Antwortsignal eine zusätzliche Information zu einer Betriebseinstellung des Aufstellgeräts und/oder einem Betriebsparameter des Aufstellgeräts und/oder einem Betriebszustand des Aufstellgeräts beinhaltet. Beispielsweise kann es vorgesehen sein, dass eine an einem als Teekocher ausgebildeten Aufstellgerät vorausgewählte Zubereitungstemperatur für den zu erhitzenden Tee mittels des Antwortsignals an die Kochfeldsteuerung zur Ansteuerung der dem Teekocher zugeordneten Heizspule übertragen wird. Ferner ist es möglich, dass mittels des Antwortsignals eine Temperatur des Aufstellgeräts und/oder eine für das Garen mit einem als ein Kochgeschirr ausgebildeten Aufstellgeräts erforderliche Leistung an die Kochfeldsteuerung zur Ansteuerung der mindestens einen Heizspule übertragen werden/wird. Letzteres kann beispielsweise dann sinnvoll sein, wenn das Kochgeschirr auf mehreren Kochstellen und den diesen zugeordneten Heizspulen aufgestellt ist.

Neben den mittels der Ausführungsbeispiele des erfindungsgemäßen Verfahrens exemplarisch erläuterten Auslöseereignissen kann es sein, dass die Heizspulen der Kochstellen des Kochfelds zur automatischen Zuordnung in Abhängigkeit mindestens eines von dem Kochfeld und/oder dem Aufstellgerät und/oder dem Drittgerät abhängigen Auslöseereignis mittels der Kochfeldsteuerung angesteuert werden.

Ferner ist der induzierte Strom und/oder die induzierte Spannung und/oder eine Bewegung mindestens eines an dem Aufstellgerät angeordneten Gegenstands, wie beispielsweise MEMS, in einer festen, flüssigen oder gelförmigen Matrix verankerte magnetische Nanopartikel, und/oder eine auf einen derartigen Gegenstand ausgeübte Kraft und/oder eine bei einem derartigen Gegenstand veränderte Magnetisierung/Magnetisierungsrichtung für das Antwortsignal nutzbar.

Im Unterschied zu den erläuterten Ausführungsbeispielen und zu den obigen Ausführungen kann das System zusätzlich ein Drittgerät mit einer Empfangseinheit und einer Auswerteeinheit umfassen, wobei das Drittgerät signalübertragend mit der Kochfeldsteuerung verbunden ist. Entsprechend ist es auch denkbar, dass die Übertragung des Antwortsignals zusätzlich oder alternativ an das Drittgerät erfolgt. Analog zu der Kochfeldsteuerung kann die Auswertung des Antwortsignals teilweise oder vollständig in dem Drittgerät erfolgen. Bei dem Drittgerät kann es sich beispielsweise um ein Smartphone, ein Tablet, einen Computer oder um eine zentrale Benutzerschnittstelle handeln, die für die Bedienung einer Vielzahl von Küchengeräten verwendet wird.

Eine vorteilhafte Weiterbildung der erläuterten Ausführungsbeispiele, nämlich, dass sich die mittels der jeweiligen Ansteuerung erzeugten Zuordnungssignale der Heizspulen der einzelnen Kochstellen voneinander unterscheiden, sieht vor, dass in den mittels der Ansteuerung erzeugten Zuordnungssignalen der Heizspulen der einzelnen Kochstellen jeweils eine voneinander verschiedene Verzögerungszeit codiert ist, wobei die Sendeeinheit des auf eine bestimmte Kochstelle aufgestellten Aufstellgeräts in Abhängigkeit der codierten Verzögerungszeit der Heizspule dieser Kochstelle die Sendung des Antwortsignals an die Empfangseinheit verzögert. Auf diese Weise ist eine Unterscheidung der Zuordnungssignale mit denen die einzelnen Heizspulen der Kochstellen mittels der Kochfeldsteuerung angesteuert werden, und damit eine Unterscheidung der einzelnen Kochstellen besonders einfach realisiert. Insbesondere vorteilhaft ist diese Weiterbildung bei einer gleichzeitigen Ansteuerung der Heizspulen der Kochstellen. Beispielsweise sind die Zuordnungssignale, analog zu den Ausführungsbeispielen, als Leistungsprofile ausgebildet.

Eine vorteilhafte Weiterbildung der vorgenannten Ausführungsform sieht vor, dass die codierten Verzögerungszeiten der zur Ansteuerung der Heizspulen erzeugten Zuordnungssignale konfigurierbar sind. Beispielsweise könnten die codierten Verzögerungszeiten derart konfigurierbar sein, dass dadurch voneinander verschiedene Bearbeitungsdauern in einer Mehrzahl von auf Kochstellen des Kochfelds gleichzeitig aufgestellten Aufstellgeräten kompensierbar ist. Entsprechend wäre es möglich, dass die jeweiligen Antwortsignale der einzelnen Aufstellgeräte mit einem einheitlichen Offset zwischen der Ansteuerung der Heizspulen jeder der Mehrzahl von Kochstellen und dem Empfang des Antwortsignals mittels der Empfangseinheit verarbeitet werden können. Beispielsweise könnte die vorgenannte Konfiguration darüber hinaus dynamisch angepasst werden, um bei wechselnden Konstellationen von dem mindestens einen auf das Kochfeld aufgestellten Aufstellgerät eine möglichst kurze Reaktionszeit des Kochfelds, nämlich eine möglichst kurze automatische Zuordnung des mindestens einen Aufstellgeräts zu einer bestimmten Kochstelle der Mehrzahl von Kochstellen, zu ermöglichen. Beispielsweise könnten die codierten Verzögerungszeiten derart dynamisch konfiguriert sein, dass die Kochfeldsteuerung erkennt, welche Aufstellgeräte zu einem Zeitpunkt auf dem Kochfeld aufgestellt sind und in Abhängigkeit des aufgestellten Aufstellgeräts mit der längsten Bearbeitungsdauer die codierten Verzögerungszeiten für die zu den Kochstellen der übrigen auf dem Kochfeld aufgestellten Aufstellgeräte korrespondierenden Heizspulen derart konfiguriert, dass die Antwortsignale der auf diesen Kochstellen aufgestellten übrigen Aufstellgeräte und das Aufstellgerät mit der längsten Bearbeitungsdauer im Wesentlichen den gleichen Offset zwischen der Ansteuerung der Heizspulen jeder der Mehrzahl von Kochstellen und dem Empfang des Antwortsignals mittels der Empfangseinheit aufweisen.

Eine andere vorteilhafte Weiterbildung sieht vor, dass die Zuordnung des auf eine bestimmte Kochstelle der Mehrzahl von Kochstellen aufgestellten Aufstellgeräts zu dieser bestimmten Kochstelle in der Auswerteeinheit mittels einer Gesamtlaufzeit von der Ansteuerung der dieser Kochstelle zugeordneten mindestens einen Heizspule mit dem Zuordnungssignal bis zu dem Empfang des mittels der Empfangseinheit empfangenen Antwortsignals des auf diese Kochstelle aufgestellten Aufstellgeräts erfolgt. Hierdurch ist eine alternative oder zusätzliche Möglichkeit der automatischen Zuordnung von dem mindestens einen Aufstellgerät zu einer bestimmten Kochstelle der Mehrzahl von Kochstellen des Kochfelds geschaffen. Entsprechend ist es denkbar, dass die automatische Zuordnung auf Basis von voneinander verschiedenen Zuordnungssignalen der Heizspulen der einzelnen Kochstellen des Kochfelds und/oder auf Basis von Gesamtlaufzeiten für jede mögliche Paarung der Mehrzahl von Kochstellen mit dem mindestens einen Aufstellgerät erfolgt.

Eine vorteilhafte Weiterbildung der vorgenannten Ausführungsform sieht vor, dass für jede mögliche Paarung der Mehrzahl von Kochstellen mit dem mindestens einen Aufstellgerät eine Gesamtlaufzeit vorher festgelegt und in einem mit der Kochfeldsteuerung oder dem Drittgerät in Signalübertragungsverbindung stehenden Speicher abgespeichert ist. Auf diese Weise ist die Erfindung besonders einfach realisiert. Beispielsweise kann der Speicher als eine mit der Kochfeldsteuerung oder dem Drittgerät signalübertragend verbundene Cloud ausgebildet sein. Die Gesamtlaufzeiten können in dem Speicher dabei als eine Liste oder als ein Algorithmus abgespeichert sein. Ein Algorithmus ist gegenüber einer Liste dann von Vorteil, wenn in dem Speicher eine große Anzahl von Korrelationen zu handhaben ist.

Eine vorteilhafte Weiterbildung nach einer der beiden letztgenannten Ausführungsformen sieht vor, dass eine von einem auf eine bestimmte Kochstelle der Mehrzahl von Kochstellen aufgestellten Aufstellgerät abhängige Teillaufzeit der Gesamtlaufzeit mittels des Antwortsignals von der Sendeeinheit dieses Aufstellgeräts an die Empfangseinheit übertragen und die Gesamtlaufzeit in der Auswerteeinheit mittels der Teillaufzeit ermittelt wird. Hierdurch ist es möglich, spezifische Eigenschaften des mindestens einen Aufstellgeräts, beispielsweise die verbaute Hardware und/oder die aufgespielte Firmware, die die von dem jeweiligen Aufstellgerät abhängige Teillaufzeit der Gesamtlaufzeit beeinflussen können, bei der Ermittlung der Gesamtlaufzeit zu berücksichtigen. Entsprechend ist die automatische Zuordnung des mindestens einen Aufstellgeräts zu einer bestimmten Kochstelle der Mehrzahl von Kochstellen qualitativ verbessert.

Eine besonders vorteilhafte Weiterbildung der drei letztgenannten Ausführungsformen sieht bei Zuordnungssignalen mit codierten Verzögerungszeiten, die konfigurierbar sind, vor, dass die Identifizierung eines bestimmten Aufstellgeräts des mindestens einen Aufstellgeräts mittels der Auswerteeinheit in Abhängigkeit der Gesamtlaufzeit für jede mögliche Paarung der Mehrzahl von Kochstellen mit dem mindestens einen Aufstellgerät erfolgt, wobei die Gesamtlaufzeit für jede mögliche Paarung der Mehrzahl von Kochstellen mit dem mindestens einen Aufstellgerät voneinander verschieden ist. Auf diese Weise ist das erfindungsgemäße Verfahren vereinfacht, da die Auswertung der Gesamtlaufzeit in der Auswerteeinheit nicht nur für die automatische Zuordnung dieses individuellen Aufstellgeräts zu einer bestimmten Kochstelle der Mehrzahl von Kochstellen des Kochfelds, sondern auch für die Identifizierung dieses individuellen Aufstellgeräts dient.

Denkbar ist auch, dass die automatische Zuordnung auf Basis von voneinander verschiedenen Zuordnungssignalen der Heizspulen der einzelnen Kochstellen des Kochfelds und zusätzlich auf Basis von voneinander verschiedenen Gesamtlaufzeiten für jede mögliche Paarung der Mehrzahl von Kochstellen mit dem mindestens einen Aufstellgerät erfolgt. Hierdurch ist die Qualität der automatischen Zuordnung des mindestens einen Aufstellgeräts zu einer bestimmten Kochstelle der Mehrzahl von Kochstellen des Kochfelds verbessert. Alternativ dazu wäre es möglich, dass zu einer der beiden vorgenannten Möglichkeiten zusätzlich eine andere, bekannte Methode der automatischen Zuordnung von Aufstellgerät und Kochstelle bei dem erfindungsgemäßen zusätzlich verwendet wird. Eine weitere Verbesserung der automatischen Zuordnung lässt sich darüber hinaus erreichen, wenn die vorgenannten Methoden in Kombination miteinander bei dem erfindungsgemäßen Verfahren eingesetzt werden.

In anderen Ausführungsformen der Erfindung kann vorgesehen sein, dass das induktive Kochfeld mittels der Kochfeldsteuerung zusätzlich in einem Demonstrationsmodus betrieben wird, wobei das induktive Kochfeld mittels eines von der Empfangseinheit der Kochfeldsteuerung empfangenen Umschaltsignals in den Demonstrationsmodus überführt wird, und wobei der Demonstrationsmodus im Wesentlichen dem Bereitschaftsmodus entspricht, jedoch eine automatische Überführung von dem Demonstrationsmodus in den Betriebsmodus nicht möglich ist. Auf diese Weise ist es möglich, die Funktionalität des induktiven Kochfelds in dessen Bereitschaftsmodus zu Demonstrationszwecken, beispielsweise auf Messen, nutzen zu können, ohne die Gefahr, dass das induktive Kochfeld in ungewünschter Weise in den Betriebsmodus überführt wird. Entsprechend ist die Sicherheit auch in dem Demonstrationsmodus des induktiven Kochfelds vollumfänglich gewährleistet.

Ferner kann es vorgesehen sein, dass in Abhängigkeit von Ausgangssignalen des Sensors eine Füllmenge in dem Aufstellgerät und/oder ein für die Zubereitung des Mediums relevanter Zustand des Mediums detektiert wird/werden. Hierdurch ist die Funktionalität des Sensors weiter gesteigert. Beispielsweise könnte alternativ oder zusätzlich zu der Füllmenge des Mediums in dem Aufstellgerät auch detektiert werden, ob das Medium seinen Siedepunkt erreicht hat. Auch ist eine Erfassung des Siedeeindrucks des Mediums, also des Siedeverhaltens des Mediums, insbesondere in Bezug auf die Dichte der zugeführten Wärmeleistung, denkbar. Ferner kann das erfindungsgemäße Verfahren dazu verwendet werden, um eine Geräuschemission bei dem Zubereitungsvorgang zu vermeiden. Beispielsweise, in dem eine Arbeitsfrequenz der Heizspule in Abhängigkeit von Ausgangssignalen des Sensors dahingehend angepasst wird, dass ein Resonanzfall bei dem individuellen Aufstellgerät vermieden wird. Darüber hinaus ist es auch möglich, dass die Auswertung der Ausgangssignale des Sensors zumindest teilweise in der Kochfeldsteuerung und/oder in einem mit der Kochfeldsteuerung in Signalübertragungsverbindung stehenden Drittgerät erfolgt.

## Patentansprüche

1. Verfahren zur automatischen Zuordnung mindestens eines Aufstellgeräts (12) zu mindestens einer Kochstelle (6) eines induktiven Kochfelds (4) mit einer Mehrzahl von mittels jeweils mindestens einer Heizspule (8) induktiv beheizten Kochstellen (6),
wobei das Kochfeld (4) eine Kochfeldsteuerung (10) zur Ansteuerung der Heizspulen (8) mit einem Zuordnungssignal
und das Aufstellgerät (12) eine mit den Heizspulen (8) des Kochfelds (4) induktiv koppelbare Induktionsspule (14)
und eine Sendeeinheit (16) aufweist,
und wobei die Sendeeinheit (16) bei einer mittels mindestens einer der Heizspulen (8) in die Induktionsspule (14) des auf die dieser Heizspule (8) zugeordneten Kochstelle (6) aufgestellten Aufstellgeräts (12) induzierten Spannung mit einer Betriebsenergie versorgt wird
und die Sendeeinheit (16) des Aufstellgeräts (12) mittels der Betriebsenergie ein das Aufstellgerät (12) identifizierendes Antwortsignal (20) an eine Empfangseinheit (18) der Kochfeldsteuerung (10) oder eines mit der Kochfeldsteuerung in Signalübertragungsverbindung stehenden Drittgeräts sendet,
**dadurch gekennzeichnet, dass**
das Antwortsignal (20) zu dem mittels mindestens einer der dieser Kochstelle (6) zugeordneten Heizspulen (8) in die Induktionsspule (14) des Aufstellgeräts (12) induzierten Zuordnungssignal korreliert
und das Antwortsignal (20) in einer mit der Empfangseinheit (18) signalübertragend verbundenen Auswerteeinheit (22) der Kochfeldsteuerung (10) oder des Drittgeräts mit dem Zuordnungssignal der mindestens einen Heizspule (8) dieser Kochstelle (6) verglichen wird
und in Abhängigkeit dieses Vergleichs das identifizierte Aufstellgerät (12) dieser Kochstelle (6) zugeordnet wird.

2. Verfahren nach Anspruch 1, **dadurch gekennzeichnet, dass** die Heizspulen (8) der Kochstellen (6) des Kochfelds (4) zur automatischen Zuordnung sukzessive angesteuert werden oder die Heizspulen (8) der Kochstellen (6) des Kochfelds (4) zur automatischen Zuordnung gleichzeitig angesteuert werden.

3. Verfahren nach einem der Ansprüche 1 bis 2, **dadurch gekennzeichnet, dass** sich die mittels der jeweiligen Ansteuerung erzeugten Zuordnungssignale der Heizspulen (8) der einzelnen Kochstellen (6) voneinander unterscheiden.

4. Verfahren nach einem der vorhergehenden Ansprüche, **dadurch gekennzeichnet, dass** die Heizspulen der Mehrzahl von Kochstellen mittels der Kochfeldsteuerung mit voneinander verschiedenen Zuordnungssignalen für jede der Mehrzahl von Kochstellen nahezu ohne zeitliche Verzögerung oder ohne zeitliche Verzögerung, also simultan, angesteuert werden.

5. Verfahren nach einem der vorhergehenden Ansprüche, **dadurch gekennzeichnet, dass** in den mittels der Ansteuerung erzeugten Zuordnungssignalen der Heizspulen der einzelnen Kochstellen jeweils eine voneinander verschiedene Verzögerungszeit codiert ist, wobei die Sendeeinheit des auf eine bestimmte Kochstelle aufgestellten Aufstellgeräts in Abhängigkeit der codierten Verzögerungszeit der Heizspule dieser Kochstelle die Sendung des Antwortsignals (20) an die Empfangseinheit verzögert.

6. Verfahren nach einem der vorhergehenden Ansprüche, **dadurch gekennzeichnet, dass** die Zuordnung des auf eine bestimmte Kochstelle der Mehrzahl von Kochstellen aufgestellten Aufstellgeräts zu dieser bestimmten Kochstelle in der Auswerteeinheit mittels einer Gesamtlaufzeit von der Ansteuerung der dieser Kochstelle zugeordneten mindestens einen Heizspule mit dem Zuordnungssignal bis zu dem Empfang des mittels der Empfangseinheit empfangenen Antwortsignals (20) des auf dieser Kochstelle aufgestellten Aufstellgeräts erfolgt.

7. Verfahren nach Anspruch 6, **dadurch gekennzeichnet, dass** für jede mögliche Paarung der Mehrzahl von Kochstellen (6) mit dem mindestens einen Aufstellgerät (12) eine Gesamtlaufzeit vorher festgelegt und in einem mit der Kochfeldsteuerung oder dem Drittgerät in Signalübertragungsverbindung stehenden Speicher abgespeichert ist.

8. Verfahren nach Anspruch 6 oder 7, **dadurch gekennzeichnet, dass** eine von einem auf eine bestimmte Kochstelle der Mehrzahl von Kochstellen aufgestellten Aufstellgerät (12) abhängige Teillaufzeit der Gesamtlaufzeit mittels des Antwortsignals (20) von der Sendeeinheit dieses Aufstellgeräts an die Empfangseinheit übertragen und die Gesamtlaufzeit in der Auswerteeinheit mittels der Teillaufzeit ermittelt wird.

9. Verfahren nach einem der Ansprüche 7 oder 8, rückbezogen auf Anspruch 5, **dadurch gekennzeichnet, dass** die Identifizierung eines bestimmten Aufstellgeräts des mindestens einen Aufstellgeräts (12) mittels der Auswerteeinheit in Abhängigkeit der Gesamtlaufzeit für jede mögliche Paarung der Mehrzahl von Kochstellen (6) mit dem mindestens einen Aufstellgerät (12) erfolgt, wobei die Gesamtlaufzeit für jede mögliche Paarung der Mehrzahl von Kochstellen (6) mit dem mindestens einen Aufstellgerät (12) voneinander verschieden ist.

10. Verfahren nach einem der vorhergehenden Ansprüche, **dadurch gekennzeichnet, dass** das Antwortsignal (20) eine zusätzliche Information zu einer Betriebseinstellung des Aufstellgeräts (12) und/oder einem Betriebsparameter des Aufstellgeräts (12) und/oder einem Betriebszustand des Aufstellgeräts (12) beinhaltet.

11. Verfahren nach einem der vorhergehenden Ansprüche, **dadurch gekennzeichnet, dass** die Heizspulen (8) der Kochstellen (6) des Kochfelds (4) zur automatischen Zuordnung in Abhängigkeit mindestens eines von dem Kochfeld (4) und/oder dem Aufstellgerät (12) und/oder dem Drittgerät abhängigen Auslöseereignisses mittels der Kochfeldsteuerung (10) angesteuert werden.

12. Verfahren nach Anspruch 11, **dadurch gekennzeichnet, dass** das Auslöseereignis bei eingeschaltetem Kochfeld (4) in Abhängigkeit mindestens eines vorher festgelegten Zeitintervalls kontinuierlich erfolgt oder dass das Auslöseereignis in Abhängigkeit mindestens einer Veränderung einer Zuordnung von dem mindestens einen Aufstellgerät (12) zu mindestens einer der Kochstellen (6) der Mehrzahl der Kochstellen (6) erfolgt.

13. Verfahren nach einem der vorhergehenden Ansprüche, **dadurch gekennzeichnet, dass** die Heizspule (8) mittels der Kochfeldsteuerung (10) in einem Standby-Modus des induktiven Kochfelds (4) nicht angesteuert und in einem Betriebsmodus des induktiven Kochfelds (4) zur Beheizung eines auf der Kochstelle (6) aufgestellten Aufstellgeräts (12) mit der Sendeeinheit (16) angesteuert wird, wobei das induktive Kochfeld (4) mittels der Kochfeldsteuerung (10) zusätzlich in einem Bereitschaftsmodus betrieben wird, und wobei das induktive Kochfeld (4) mittels der von der Empfangseinheit (18) der Kochfeldsteuerung (10) empfangenen Wecksignals von dem Standby-Modus in den Bereitschaftsmodus überführt wird, und wobei die Heizspule (8) in dem Bereitschaftsmodus mittels der Kochfeldsteuerung (10) derart angesteuert wird, dass zum einen eine für einen Zubereitungsvorgang wirksame Beheizung des Aufstellgeräts (12) verhindert ist und zum anderen eine Signalübertragung zwischen der Sendeeinheit (16) und der Empfangseinheit (18) mittels der Heizspule (8) ermöglicht ist.

14. Verfahren nach Anspruch 13, **dadurch gekennzeichnet, dass** die Heizspule (8) in dem Bereitschaftsmodus mittels der Kochfeldsteuerung (10) derart angesteuert wird, dass eine Übertragung einer Betriebsenergie von dem induktiven Kochfeld (4) zu dem Aufstellgerät (12), das auf der dieser Heizspule (8) zugeordneten Kochstelle (6) aufgestellt ist, mittels der Heizspule (8) ermöglicht ist.

15. Verfahren nach Anspruch 13 oder 14, **dadurch gekennzeichnet, dass** das Wecksignal
mittels einer Betätigung eines an dem Aufstellgerät (12) angeordneten und mit der Sendeeinheit (16) in Signalübertragungsverbindung stehenden Bedienelements und/oder
mittels eines an dem Aufstellgerät (12) angeordneten und mit der Sendeeinheit (16) in Signalübertragungsverbindung stehenden Bewegungssensors
und/oder
mittels einer Betätigung eines an dem induktiven Kochfeld (4) angeordneten und mit der Empfangseinheit (18) der Kochfeldsteuerung (10) in Signalübertragungsverbindung stehenden Bedienelements
und/oder
mittels einer Betätigung eines an einem Drittgerät angeordneten und mit der Empfangseinheit (18) der Kochfeldsteuerung (10) in Signalübertragungsverbindung stehenden Bedienelements
erzeugt wird.

16. Verfahren nach einem der Ansprüche 13 bis 15, **dadurch gekennzeichnet,**
**dass** eine elektrische Leistung, mit der die Kochfeldsteuerung (10) die Heizspule (8) in dem Bereitschaftsmodus ansteuert, einen Mittelwert von kleiner oder gleich 30 W, bevorzugt kleiner oder gleich 15 W, aufweist
und/oder
**dass** eine elektrische Leistung, mit der die Kochfeldsteuerung (10) die Heizspule (8) in dem Bereitschaftsmodus ansteuert, ein Pausen-Leistungs-Verhältnis von größer oder gleich 1000:1 aufweist.

17. Verfahren nach einem der Ansprüche 13 bis 15, **dadurch gekennzeichnet, dass** die automatische Zuordnung mindestens eines Aufstellgeräts (12) zu mindestens einer Kochstelle (6) des induktiven Kochfelds (4) mit einer Mehrzahl von mittels jeweils mindestens einer Heizspule (8) induktiv beheizten Kochstellen (6) in dem Bereitschaftsmodus erfolgt.

18. Verfahren nach Anspruch 17, **dadurch gekennzeichnet, dass** das induktive Kochfeld (4) mittels der Kochfeldsteuerung (10) und in Abhängigkeit von dem in dem Bereitschaftsmodus mittels der Empfangseinheit (18) empfangenen Antwortsignal (20) automatisch von dem Bereitschaftsmodus in den Betriebsmodus überführt wird.

19. Verfahren nach einem der vorhergehenden Ansprüche, **dadurch gekennzeichnet, dass** die Ansteuerung der Heizspule (8) in Abhängigkeit von einem mittels eines Sensors (17; 17`) erkannten Aufstellereignisses oder einer mittels des Sensors (17; 17`) erkannten Unterlage, auf der das Aufstellgerät (12) aufgestellt worden ist, erfolgt.
und/oder
dass in Abhängigkeit von einem mittels des Sensors (17; 17') erkannten Aufstellereignisses oder einer mittels des Sensors (17; 17`) erkannten Unterlage, auf der das Aufstellgerät (12) aufgestellt worden ist, eine Verfahrensroutine zur automatischen Zuordnung des Aufstellgeräts (12) zu mindestens einer Kochstelle (6) des induktiven Kochfelds (4) gestartet wird.

20. Verfahren nach einem der vorhergehenden Ansprüche, wobei die Zuordnungssignale für jede der Kochstellen (6) der Mehrzahl von Kochstellen (6) voneinander verschiedene Signaldauern haben.

21. System (2), umfassend wenigstens ein Aufstellgerät (12) für ein induktives Kochfeld (4) und ein induktives Kochfeld (4) mit mindestens einer Kochstelle (6), zur Durchführung des Verfahrens nach einem der Ansprüche 1 bis 20 zur automatischen Zuordnung mindestens eines Aufstellgeräts (12) zu mindestens einer Kochstelle (6) eines induktiven Kochfelds (4) mit einer Mehrzahl von mittels jeweils mindestens einer Heizspule (8) induktiv beheizten Kochstellen (6),
wobei das Kochfeld (4)
für jede Kochstelle (6) mindestens eine Heizspule (8) zur induktiven Beheizung der Kochstellen (6)
und eine Kochfeldsteuerung (10) zur Ansteuerung der Heizspule (8) in einem Betriebsmodus des induktiven Kochfelds (4) zur Beheizung eines auf der Kochstelle (6) aufgestellten Aufstellgeräts (12)
aufweist,
wobei das Aufstellgerät (12) eine mit einer Heizspule (8) des induktiven Kochfelds (4) induktiv koppelbaren Induktionsspule (14) und eine Sendeeinheit (16) aufweist,
wobei die Kochfeldsteuerung (10) zur Ansteuerung der Heizspulen (8) mit einem Zuordnungssignal eingerichtet ist und
wobei die Sendeeinheit (16) des Aufstellgeräts (12) mittels von mindestens einer der Heizspulen (8) in die Induktionsspule (14) des Aufstellgeräts (12) induzierten Spannung mit einer Betriebsenergie versorgbar ist, wobei die Spannung von einer Heizspule (8) induziert wird, welche der Kochstelle (6) zugeordnet ist, auf welcher das Aufstellgerät (12) aufgestellt ist,
und mittels der mit der Betriebsenergie versorgten Sendeeinheit (16) des Aufstellgeräts (12) ein das Aufstellgerät (12) identifizierendes Antwortsignal (20) an eine Empfangseinheit (18) der Kochfeldsteuerung (10) oder eines mit der Kochfeldsteuerung in Signalübertragungsverbindung stehenden Drittgeräts sendbar ist,
wobei das Antwortsignal (20) zu einem mittels mindestens einer der dieser Kochstelle (6) zugeordneten Heizspulen (8) in die Induktionsspule (14) des Aufstellgeräts (12) induzierten Zuordnungssignal korreliert und
das Antwortsignal (20) in einer mit der Empfangseinheit (18) signalübertragend verbundenen Auswerteeinheit (22) der Kochfeldsteuerung (10) oder dem Drittgerät mit dem Zuordnungssignal der mindestens einen Heizspule (8) dieser Kochstelle (6) vergleichbar ist
und in Abhängigkeit dieses Vergleichs das identifizierte Aufstellgerät (12) dieser Kochstelle (6) zuordenbar ist.

22. System (2) nach Anspruch 21, wobei die Kochfeldsteuerung (10) derart ausgebildet und eingerichtet ist, dass das induktive Kochfeld (4) zusätzlich in einem Standby-Modus betreibbar ist, wobei eine Ansteuerung der Heizspule (8) in dem Standby-Modus nicht ermöglicht ist, **dadurch gekennzeichnet, dass** die Kochfeldsteuerung (10) derart ausgebildet und eingerichtet ist, dass das induktive Kochfeld (4) zusätzlich in einem Bereitschaftsmodus betreibbar ist, wobei das induktive Kochfeld (4) mittels eines von einer Empfangseinheit (18) der Kochfeldsteuerung (10) empfangenen Wecksignals von dem Standby-Modus in den Bereitschaftsmodus überführbar ist, und wobei die Heizspule (8) in dem Bereitschaftsmodus mittels der Kochfeldsteuerung (10) derart ansteuerbar ist, dass zum einen eine für einen Zubereitungsvorgang wirksame Beheizung des Aufstellgeräts (12) verhindert ist und zum anderen eine Signalübertragung zwischen der Sendeeinheit (16) und der Empfangseinheit (18) mittels der Heizspule (8) ermöglicht ist.

23. System (2) nach einem der Ansprüche 21 oder 22, wobei die Heizspule (8) in dem Bereitschaftsmodus mittels der Kochfeldsteuerung (10) derart ansteuerbar ist, dass eine Übertragung einer Betriebsenergie von dem induktiven Kochfeld (4) zu dem Aufstellgerät (12), das auf der dieser Heizspule (8) zugeordneten Kochstelle (6) aufgestellt ist, mittels der Heizspule (8) ermöglicht ist.

24. System (2) nach einem der Ansprüche 21 bis 23, wobei das induktive Kochfeld (4) mittels der Kochfeldsteuerung (10) und in Abhängigkeit von einem in dem Bereitschaftsmodus mittels der Empfangseinheit (18) empfangenen Antwortsignal (20) automatisch von dem Bereitschaftsmodus in den Betriebsmodus überführbar ist.

25. System (2) nach einem der Ansprüche 21 bis 24, wobei das Aufstellgerät (12) mindestens einen Sensor (17; 17') zur Erkennung eines Aufstellereignisses oder zur Erkennung eines Aufstellereignisses und zur Erkennung der Beschaffenheit einer Unterlage, auf der das Aufstellgerät (12) aufgestellt worden ist, aufweist, wobei insbesondere der Sensor (17; 17') zur Erkennung eines Aufstellereignisses als ein Bedienelement (23) zur manuellen Bedienung durch einen Benutzer ausgeführt ist.

## Claims

1. Method for automatically assigning at least one installation device (12) to at least one cooking hob (6) of an inductive stove (4) having a plurality of cooking hobs (6) which are each inductively heated by means of at least one heating coil (8),
the stove (4) comprising a stove controller (10) for actuating the heating coils (8) with an assignment signal
and the installation device (12) comprising an induction coil (14) which can be inductively coupled to the heating coils (8) of the stove (4),
and a transmission unit (16),
the transmission unit (16) being supplied with an operating energy when a voltage is induced by means of at least one of the heating coils (8) in the induction coil (14) of the installation device (12) installed on the cooking hob (6) assigned to said heating coil (8),
and the transmission unit (16) of the installation device (12) transmitting, by means of the operating energy, a response signal (20) which identifies the installation device (12) to a receiving unit (18) of the stove controller (10) or of a third device which is in signal-transmitting connection with the stove controller,
**characterised in that**
the response signal (20) correlates with the assignment signal induced by means of at least one of the heating coils (8) assigned to said cooking hob (6) in the induction coil (14) of the installation device (12),
and the response signal (20) is compared with the assignment signal of the at least one heating coil (8) of said cooking hob (6) in an evaluation unit (22) of the stove controller (10) or of the third device, which evaluation unit is in signal-transmitting connection with the receiving unit (18),
and the identified installation device (12) is assigned to said cooking hob (6) on the basis of said comparison.

2. Method according to claim 1, **characterised in that** the heating coils (8) of the cooking hobs (6) of the stove (4) are successively actuated for automatic assignment, or the heating coils (8) of the cooking hobs (6) of the stove (4) are simultaneously actuated for automatic assignment.

3. Method according to either of claims 1 and 2, **characterised in that** the assignment signals of the heating coils (8) of the individual cooking hobs (6) generated by means of the respective actuation differ from one another.

4. Method according to any of the preceding claims, **characterised in that** the heating coils of the plurality of cooking hobs are actuated by means of the stove controller with mutually differing assignment signals for each of the plurality of cooking hobs, virtually without a time delay, or without a time delay, i.e. simultaneously.

5. Method according to any of the preceding claims, **characterised in that** a delay time is encoded in each of the assignment signals of the heating coils of the individual cooking hobs that are generated by means of the actuation, said delay times differing from one another, the transmission unit of the installation device installed on a specific cooking hob delaying the transmission of the response signal (20) to the receiving unit on the basis of the encoded delay time of the heating coil of said cooking hob.

6. Method according to any of the preceding claims, **characterised in that** the assignment of the installation device installed on a specific cooking hob of the plurality of cooking hobs to said specific cooking hob is carried out in the evaluation unit using a total duration from the actuation of the at least one heating coil assigned to said cooking hob by means of the assignment signal until the reception of the response signal (20) of the installation device installed on said cooking hob, which response signal is received by means of the receiving unit.

7. Method according to claim 6, **characterised in that** for each possible pairing of the plurality of cooking hobs (6) with the at least one installation device (12), a total duration is predetermined and stored in a memory that is in signal-transmitting connection with the stove controller or with the third device.

8. Method according to either claim 6 or claim 7, **characterised in that** a partial duration of the total duration, which partial duration is dependent on an installation device (12) installed on a specific cooking hob of the plurality of cooking hobs, is transmitted by means of the response signal (20) from the transmission unit of said installation device to the receiving unit, and the total duration is determined in the evaluation unit by means of the partial duration.

9. Method according to either of claims 7 and 8, referring back to claim 5, **characterised in that** the identification of a specific installation device of the at least one installation device (12) is carried out by means of the evaluation unit on the basis of the total duration for each possible pairing of the plurality of cooking hobs (6) with the at least one installation device (12), the total durations for each possible pairing of the plurality of cooking hobs (6) with the at least one installation device (12) being different from one another.

10. Method according to any of the preceding claims, **characterised in that** the response signal (20) includes additional information about an operating setting of the installation device (12) and/or an operating parameter of the installation device (12) and/or an operating state of the installation device (12).

11. Method according to any of the preceding claims, **characterised in that** the heating coils (8) of the cooking hobs (6) of the stove (4) are actuated for automatic assignment by means of the stove controller (10) on the basis of at least one triggering event dependent on the stove (4) and/or the installation device (12) and/or the third device.

12. Method according to claim 11, **characterised in that** when the stove (4) is switched on, the triggering event takes place continuously on the basis of at least one predetermined time interval or **in that** the triggering event takes place on the basis of at least one change of an assignment of the at least one installation device (12) to at least one of the cooking hobs (6) of the plurality of cooking hobs (6).

13. Method according to any of the preceding claims, **characterised in that** the heating coil (8) is not actuated by means of the stove controller (10) in a standby mode of the inductive stove (4) and is actuated in an operating mode of the inductive stove (4) for heating an installation device (12) installed on the cooking hob (6) by means of the transmission unit (16), the inductive stove (4) being additionally operated in a ready mode by means of the stove controller (10), and the inductive stove (4) being transferred from the standby mode to the ready mode by means of the wake-up signal received by the receiving unit (18) of the stove controller (10), and the heating coil (8) being actuated in the standby mode by means of the stove controller (10) in such a way that effective heating of the installation device (12) for a preparation process is prevented and a signal transmission between the transmission unit (16) and the receiving unit (18) is enabled by means of the heating coil (8).

14. Method according to claim 13, **characterised in that** the heating coil (8) is controlled in the standby mode by means of the stove controller (10) in such a way that a transmission of an operating energy from the inductive stove (4) to the installation device (12) which is installed on the cooking hob (6) assigned to said heating coil (8) is made possible by means of the heating coil (8).

15. Method according to claim 13 or claim 14, **characterised in that** the wake-up signal is generated
by actuating an operating element arranged on the installation device (12) and in signal-transmitting connection with the transmission unit (16), and/or
by means of a movement sensor arranged on the installation device (12) and in signal-transmitting connection with the transmission unit (16), and/or
by actuating an operating element arranged on the inductive stove (4) and in signal-transmitting connection with the receiving unit (18) of the stove controller (10), and/or
by actuating an operating element arranged on a third device and in signal-transmitting connection with the receiving unit (18) of the stove controller (10).

16. Method according to any of claims 13 to 15, **characterised in that** an electrical power with which the stove controller (10) actuates the heating coil (8) in the ready mode has an average value of less than or equal to 30 W, preferably less than or equal to 15 W, and/or
**in that** an electrical power with which the stove controller (10) controls the heating coil (8) in the ready mode has a pause/power ratio of greater than or equal to 1000:1.

17. Method according to any of claims 13 to 15, **characterised in that** the automatic assignment of at least one installation device (12) to at least one cooking hob (6) of the inductive stove (4) having a plurality of cooking hobs (6), each of which is inductively heated by means of at least one heating coil (8), takes place in the ready mode.

18. Method according to claim 17, **characterised in that** the inductive stove (4) is automatically transferred from the ready mode into the operating mode by means of the stove controller (10) and on the basis of the response signal (20) received in the ready mode by means of the receiving unit (18).

19. Method according to any of the preceding claims, **characterised in that** the actuation of the heating coil (8) takes place on the basis of an installation event identified by means of a sensor (17; 17') or a support, identified by means of the sensor (17; 17'), on which the installation device (12) has been installed, and/or
**in that** a method routine for automatically assigning the installation device (12) to at least one cooking hob (6) of the inductive stove (4) is started on the basis of an installation event identified by means of the sensor (17; 17') or a support, identified by means of the sensor (17; 17'), on which the installation device (12) has been installed.

20. Method according to any of the preceding claims, wherein the assignment signals for each of the cooking hobs (6) of the plurality of cooking hobs (6) have different signal durations.

21. System (2) comprising at least one installation device (12) for an inductive stove (4) and an inductive stove (4) comprising at least one cooking hob (6) for carrying out the method according to any of claims 1 to 20 for automatically assigning at least one installation device (12) to at least one cooking hob (6) of an inductive stove (4) having a plurality of cooking hobs (6), each of which is inductively heated by means of at least one heating coil (8),
wherein the stove (4) has, for each cooking hob (6), at least one heating coil (8) for inductively heating the cooking hobs (6)
and a stove controller (10) for actuating the heating coil (8) in an operating mode of the inductive stove (4) for heating an installation device (12) installed on the cooking hob (6),
wherein the installation device (12) has an induction coil (14) which can be inductively coupled to a heating coil (8) of the inductive stove (4), and a transmission unit (16),
wherein the stove controller (10) is designed to actuate the heating coils (8) with an assignment signal, and
wherein the transmission unit (16) of the installation device (12) can be supplied, by means of a voltage induced by at least one of the heating coils (8) in the induction coil (14) of the installation device (12), with an operating energy, wherein the voltage is induced by a heating coil (8) which is assigned to the cooking hob (6) on which the installation device (12) is installed,
and a response signal (20) identifying the installation device (12) is transmittable to a receiving unit (18) of the stove controller (10) or of a third device which is in signal-transmitting connection with the stove controller, by means of the transmission unit (16) of the installation device (12), which transmission unit is supplied with the operating energy,
wherein the response signal (20) correlates with an assignment signal induced by means of at least one of the heating coils (8) assigned to said cooking hob (6) in the induction coil (14) of the installation device (12) and
the response signal (20) can be compared to the assignment signal of the at least one heating coil (8) of said cooking hob (6) in an evaluation unit (22) of the stove controller (10), which evaluation unit is in signal-transmitting connection with the receiving unit (18),
and the identified installation device (12) of said cooking hob (6) can be assigned on the basis of said comparison.

22. System (2) according to claim 21, the stove controller (10) being designed and configured such that the inductive stove (4) can additionally be operated in a standby mode, it not being possible to actuate the heating coil (8) in the standby mode, **characterised in that** the stove controller (10) is designed and configured such that the inductive stove (4) can additionally be operated in a standby mode, the inductive stove (4) being transferable from the standby mode to a ready mode by means of a wake-up signal received by a receiving unit (18) of the stove controller (10), and the heating coil (8) being capable of being actuated in the ready mode by means of the stove controller (10) such that effective heating of the installation device (12) for a preparation process is prevented and a signal transmission between the transmission unit (16) and the receiving unit (18) is enabled by means of the heating coil (8).

23. System (2) according to either of claims 21 and 22, wherein the heating coil (8) can be actuated in the ready mode by means of the stove controller (10) such that a transmission of an operating energy from the inductive stove (4) to the installation device (12) which is installed on the cooking hob (6) assigned to said heating coil (8) is enabled by means of the heating coil (8).

24. System (2) according to any of claims 21 to 23, wherein the inductive stove (4) is automatically transferable from the ready mode into the operating mode by means of the stove controller (10) and on the basis of a response signal (20) received in the ready mode by means of the receiving unit (18).

25. System (2) according to any of claims 21 to 24, wherein the installation device (12) has at least one sensor (17; 17') for identifying an installation event or for identifying an installation event and for identifying the condition of a support on which the installation device (12) has been installed, wherein in particular the sensor (17; 17') is designed to identify an installation event as an operating element (23) for manual operation by a user.

## Revendications

1. Procédé permettant l'attribution automatique d'au moins un appareil de montage (12) à au moins un emplacement de cuisson (6) d'une plaque de cuisson (4) à induction comportant une pluralité d'emplacements de cuisson (6) chauffés par induction au moyen de respectivement au moins une bobine de chauffage (8),
la plaque de cuisson (4) présentant une commande de plaque de cuisson (10) permettant de commander les bobines de chauffage (8) à l'aide d'un signal d'attribution
et l'appareil de montage (12) présentant une bobine d'induction (14) pouvant être couplée par induction aux bobines de chauffage (8) de la plaque de cuisson (4)
et une unité d'émission (16),
et l'unité d'émission (16) étant alimentée en énergie de fonctionnement en présence d'une tension induite au moyen d'au moins l'une des bobines de chauffage (8) dans la bobine d'induction (14) de l'appareil de montage (12) monté sur l'emplacement de cuisson (6) attribué à cette bobine de chauffage (8)
et l'unité d'émission (16) de l'appareil de montage (12) envoyant, au moyen de l'énergie de fonctionnement, un signal de réponse (20) identifiant l'appareil de montage (12) à une unité de réception (18) de la commande de plaque de cuisson (10) ou d'un appareil tiers en liaison par transmission de signal avec la commande de plaque de cuisson,
**caractérisé en ce que**
le signal de réponse (20) est en corrélation avec le signal d'attribution induit, au moyen d'au moins l'une des bobines de chauffage (8) attribuées à cet emplacement de cuisson (6), dans la bobine d'induction (14) de l'appareil de montage (12)
et le signal de réponse (20) étant comparé, dans une unité d'évaluation (22) de la commande de plaque de cuisson (10) ou de l'appareil tiers reliée par transmission de signal à l'unité de réception (18), avec le signal d'attribution de l'au moins une bobine de chauffage (8) de cet emplacement de cuisson (6)
et, en fonction de cette comparaison, l'appareil de montage (12) identifié étant attribué à cet emplacement de cuisson (6).

2. Procédé selon la revendication 1, **caractérisé en ce que** les bobines de chauffage (8) des emplacements de cuisson (6) de la plaque de cuisson (4) sont commandées successivement pour l'attribution automatique ou les bobines de chauffage (8) des emplacements de cuisson (6) de la plaque de cuisson (4) sont commandées simultanément pour l'attribution automatique.

3. Procédé selon l'une des revendications 1 à 2, **caractérisé en ce que** les signaux d'attribution, générés au moyen de la commande respective, des bobines de chauffage (8) des différents emplacements de cuisson (6) sont différents les uns des autres.

4. Procédé selon l'une des revendications précédentes, **caractérisé en ce que** les bobines de chauffage de la pluralité d'emplacements de cuisson sont commandées, quasiment sans retard temporel ou sans retard temporel, c'est-à-dire simultanément, au moyen de la commande de plaque de cuisson à l'aide de signaux d'attribution différents les uns des autres pour chacun de la pluralité d'emplacements de cuisson.

5. Procédé selon l'une des revendications précédentes, **caractérisé en ce que** des temps de retard respectivement différents les uns des autres sont codés dans les signaux d'attribution, générés au moyen de la commande, des bobines de chauffage des différents emplacements de cuisson, l'unité d'émission de l'appareil de montage monté sur un emplacement de cuisson spécifique retardant l'envoi du signal de réponse (20) à l'unité de réception en fonction du temps de retard codé de la bobine de chauffage de cet emplacement de cuisson.

6. Procédé selon l'une des revendications précédentes, **caractérisé en ce que** l'attribution de l'appareil de montage, monté sur un emplacement de cuisson spécifique de la pluralité d'emplacements de cuisson, à cet emplacement de cuisson spécifique dans l'unité d'évaluation est effectuée au moyen d'un temps de fonctionnement total de la commande de l'au moins une bobine de chauffage attribuée à cet emplacement de cuisson à l'aide du signal d'attribution jusqu'à la réception du signal de réponse (20), reçu au moyen de l'unité de réception, de l'appareil de montage monté sur cet emplacement de cuisson.

7. Procédé selon la revendication 6, **caractérisé en ce que,** pour chaque appairage possible de la pluralité d'emplacements de cuisson (6) avec l'au moins un appareil de montage (12), un temps de fonctionnement total est défini au préalable et enregistré dans une mémoire en liaison par transmission de signal avec la commande de plaque de cuisson ou l'appareil tiers.

8. Procédé selon la revendication 6 ou 7, **caractérisé en ce qu'un** temps de fonctionnement partiel du temps de fonctionnement total, lequel temps de fonctionnement partiel dépend d'un appareil de montage (12) monté sur un emplacement de cuisson spécifique de la pluralité d'emplacements de cuisson, est transmis au moyen du signal de réponse (20) depuis l'unité d'émission de cet appareil de montage à l'unité de réception et le temps de fonctionnement total est déterminé dans l'unité d'évaluation au moyen du temps de fonctionnement partiel.

9. Procédé selon l'une des revendications 7 ou 8, dépendant de la revendication 5, **caractérisé en ce que** l'identification d'un appareil de montage spécifique de l'au moins un appareil de montage (12) est effectuée au moyen de l'unité d'évaluation en fonction du temps de fonctionnement total pour chaque appairage possible de la pluralité d'emplacements de cuisson (6) avec l'au moins un appareil de montage (12), les temps de fonctionnement total différant les uns des autres pour chaque appairage possible de la pluralité d'emplacements de cuisson (6) avec l'au moins un appareil de montage (12).

10. Procédé selon l'une des revendications précédentes, **caractérisé en ce que** le signal de réponse (20) contient des informations supplémentaires concernant un réglage de fonctionnement de l'appareil de montage (12) et/ou un paramètre de fonctionnement de l'appareil de montage (12) et/ou un état de fonctionnement de l'appareil de montage (12).

11. Procédé selon l'une des revendications précédentes, **caractérisé en ce que** les bobines de chauffage (8) des emplacements de cuisson (6) de la plaque de cuisson (4) sont commandées, pour l'attribution automatique, au moyen de la commande de plaque de cuisson (10) en fonction d'au moins un événement de déclenchement dépendant de la plaque de cuisson (4) et/ou de l'appareil de montage (12) et/ou de l'appareil tiers.

12. Procédé selon la revendication 11, **caractérisé en ce que** l'événement de déclenchement est effectué en continu, lorsque la plaque de cuisson (4) est activée, en fonction d'au moins un intervalle de temps défini au préalable **ou en ce que** l'événement de déclenchement est effectué en fonction d'au moins une modification d'une attribution de l'au moins un appareil de montage (12) à au moins l'un des emplacements de cuisson (6) de la pluralité d'emplacements de cuisson (6).

13. Procédé selon l'une des revendications précédentes, **caractérisé en ce que** la bobine de chauffage (8) n'est pas commandée au moyen de la commande de plaque de cuisson (10) dans un mode de veille de la plaque de cuisson (4) à induction et est commandée par l'unité d'émission (16) dans un mode de fonctionnement de la plaque de cuisson (4) à induction pour le chauffage d'un appareil de montage (12) monté sur l'emplacement de cuisson (6), la plaque de cuisson (4) à induction fonctionnant en outre dans un mode d'attente au moyen de la commande de plaque de cuisson (10) et la plaque de cuisson (4) à induction étant transférée du mode de veille dans le mode d'attente au moyen du signal de réveil reçu par l'unité de réception (18) de la commande de plaque de cuisson (10) et la bobine de chauffage (8) étant commandée dans le mode d'attente au moyen de la commande de plaque de cuisson (10) de manière telle que, d'une part, un chauffage actif pour un processus de préparation de l'appareil de montage (12) est empêché et, d'autre part, une transmission de signal entre l'unité d'émission (16) et l'unité de réception (18) au moyen de la bobine de chauffage (8) est permise.

14. Procédé selon la revendication 13, **caractérisé en ce que** la bobine de chauffage (8) dans le mode d'attente est commandée au moyen de la commande de plaque de cuisson (10) de manière telle qu'une transmission d'une énergie de fonctionnement depuis la plaque de cuisson (4) à induction à l'appareil de montage (12), lequel est monté sur l'emplacement de cuisson (6) attribué à cette bobine de chauffage (8), est permise au moyen de la bobine de chauffage (8).

15. Procédé selon la revendication 13 ou 14, **caractérisé en ce que** le signal de réveil est généré
au moyen d'un actionnement d'un élément de manipulation disposé au niveau de l'appareil de montage (12) et en liaison par transmission de signal avec l'unité d'émission (16) et/ou
au moyen d'un capteur de mouvement disposé au niveau de l'appareil de montage (12) et en liaison par transmission de signal avec l'unité d'émission (16) et/ou
au moyen d'un actionnement d'un élément de manipulation disposé au niveau de la plaque de cuisson (4) à induction et en liaison par transmission de signal avec l'unité de réception (18) de la commande de plaque de cuisson (10) et/ou
au moyen d'un actionnement d'un élément de manipulation disposé au niveau d'un appareil tiers et en liaison par transmission de signal avec l'unité de réception (18) de la commande de plaque de cuisson (10).

16. Procédé selon l'une des revendications 13 à 15, **caractérisé en ce qu'**une puissance électrique, à l'aide de laquelle la commande de plaque de cuisson (10) commande la bobine de chauffage (8) dans le mode d'attente, présente une valeur moyenne inférieure ou égale à 30 W, de préférence inférieure ou égale à 15 W, et/ou
**en ce qu'**une puissance électrique, à l'aide de laquelle la commande de plaque de cuisson (10) commande la bobine de chauffage (8) dans le mode d'attente, présente un rapport pause-puissance supérieur ou égal à 1 000:1.

17. Procédé selon l'une des revendications 13 à 15, **caractérisé en ce que** l'attribution automatique d'au moins un appareil de montage (12) à au moins un emplacement de cuisson (6) de la plaque de cuisson (4) à induction comportant une pluralité d'emplacements de cuisson (6) chauffés par induction au moyen de respectivement au moins une bobine de chauffage (8) est effectuée dans le mode d'attente.

18. Procédé selon la revendication 17, **caractérisé en ce que** la plaque de cuisson (4) à induction est transférée automatiquement du mode d'attente dans le mode de fonctionnement au moyen de la commande de plaque de cuisson (10) et en fonction du signal de réponse (20) reçu dans le mode d'attente au moyen de l'unité de réception (18).

19. Procédé selon l'une des revendications précédentes, **caractérisé en ce que** la commande de la bobine de chauffage (8) est effectuée en fonction d'un événement de montage détecté au moyen d'un capteur (17 ; 17') ou d'un support, sur lequel l'appareil de montage (12) a été monté, détecté au moyen du capteur (17 ; 17'). et/ou
**en ce qu'**une routine de procédé pour l'attribution automatique de l'appareil de montage (12) à au moins un emplacement de cuisson (6) de la plaque de cuisson (4) à induction est démarrée en fonction d'un événement de montage détecté au moyen du capteur (17 ; 17') ou d'un support, sur lequel l'appareil de montage (12) a été monté, détecté au moyen du capteur (17 ; 17').

20. Procédé selon l'une des revendications précédentes, les signaux d'attribution pour chacun des emplacements de cuisson (6) de la pluralité d'emplacements de cuisson (6) possédant des durées de signal différentes les unes des autres.

21. Système (2), comprenant au moins un appareil de montage (12) pour une plaque de cuisson (4) à induction et une plaque de cuisson (4) à induction comportant au moins un emplacement de cuisson (6), pour la mise en oeuvre du procédé selon l'une des revendications 1 à 20 pour l'attribution automatique d'au moins un appareil de montage (12) à au moins un emplacement de cuisson (6) d'une plaque de cuisson (4) à induction comportant une pluralité d'emplacements de cuisson (6) chauffés par induction au moyen de respectivement au moins une bobine de chauffage (8),
la plaque de cuisson (4) présentant pour chaque emplacement de cuisson (6) au moins une bobine de chauffage (8) pour le chauffage par induction des emplacements de cuisson (6)
et une commande de plaque de cuisson (10) pour la commande de la bobine de chauffage (8) dans un mode de fonctionnement de la plaque de cuisson (4) à induction pour le chauffage d'un appareil de montage (12) monté sur l'emplacement de cuisson (6),
l'appareil de montage (12) présentant une bobine d'induction (14) pouvant être couplée par induction à une bobine de chauffage (8) de la plaque de cuisson (4) à induction et une unité d'émission (16),
la commande de plaque de cuisson (10) étant conçue pour la commande des bobines de chauffage (8) à l'aide d'un signal d'attribution et
l'unité d'émission (16) de l'appareil de montage (12) pouvant être alimentée en énergie de fonctionnement au moyen d'une tension induite par au moins l'une des bobines de chauffage (8) dans la bobine d'induction (14) de l'appareil de montage (12), la tension étant induite par une bobine de chauffage (8) qui est attribuée à l'emplacement de cuisson (6) sur lequel l'appareil de montage (12) est monté,
et l'unité d'émission (16) de l'appareil de montage (12) alimentée en énergie de fonctionnement permettant d'envoyer un signal de réponse (20) identifiant l'appareil de montage (12) à une unité de réception (18) de la commande de plaque de cuisson (10) ou d'un appareil tiers en liaison par transmission de signal avec la commande de plaque de cuisson,
le signal de réponse (20) étant en corrélation avec un signal d'attribution induit, au moyen d'au moins l'une des bobines de chauffage (8) attribuées à cet emplacement de cuisson (6), dans la bobine d'induction (14) de l'appareil de montage (12) et
le signal de réponse (20) pouvant être comparé, dans une unité d'évaluation (22), reliée par transmission de signal à l'unité de réception (18), de la commande de plaque de cuisson (10) ou de l'appareil tiers, avec le signal d'attribution de l'au moins une bobine de chauffage (8) de cet emplacement de cuisson (6)
et, en fonction de cette comparaison, l'appareil de montage (12) identifié pouvant être attribué à cet emplacement de cuisson (6).

22. Système (2) selon la revendication 21, la commande de plaque de cuisson (10) étant configurée et conçue de manière telle que la plaque de cuisson (4) à induction peut fonctionner en outre dans un mode de veille, une commande de la bobine de chauffage (8) n'étant pas permise dans le mode de veille, **caractérisé en ce que** la commande de plaque de cuisson (10) est configurée et conçue de manière telle que la plaque de cuisson (4) à induction peut fonctionner en outre dans un mode d'attente, la plaque de cuisson (4) à induction pouvant être transférée du mode de veille dans le mode d'attente au moyen d'un signal de réveil reçu par une unité de réception (18) de la commande de plaque de cuisson (10) et la bobine de chauffage (8) pouvant être commandée dans le mode d'attente au moyen de la commande de plaque de cuisson (10) de manière telle que, d'une part, un chauffage actif pour un processus de préparation de l'appareil de montage (12) est empêché et, d'autre part, une transmission de signal entre l'unité d'émission (16) et l'unité de réception (18) au moyen de la bobine de chauffage (8) est permise.

23. Système (2) selon l'une des revendications 21 ou 22, la bobine de chauffage (8) dans le mode d'attente pouvant être commandée au moyen de la commande de plaque de cuisson (10) de manière telle qu'une transmission d'une énergie de fonctionnement depuis la plaque de cuisson (4) à induction à l'appareil de montage (12), lequel est monté sur l'emplacement de cuisson (6) attribué à cette bobine de chauffage (8), est permise au moyen de la bobine de chauffage (8).

24. Système (2) selon l'une des revendications 21 à 23, la plaque de cuisson (4) à induction pouvant être transférée automatiquement du mode d'attente dans le mode de fonctionnement au moyen de la commande de plaque de cuisson (10) et en fonction d'un signal de réponse (20) reçu dans le mode d'attente au moyen de l'unité de réception (18).

25. Système (2) selon l'une des revendications 21 à 24, l'appareil de montage (12) présentant au moins un capteur (17 ; 17') pour la détection d'un événement de montage ou pour la détection d'un événement de montage et pour la détection de la nature d'un support sur lequel l'appareil de montage (12) a été monté, le capteur (17 ; 17') pour la détection d'un événement de montage étant en particulier réalisé comme un élément de manipulation (23) pour la manipulation manuelle par un utilisateur.
